# EUROPEAN PATENT SPECIFICATION

(11) **EP 3 862 829 B1**
(45) Date of publication and mention of the grant of the patent: **29.03.2023**
(21) Application number: 21155479.5
(22) Date of filing: 05.02.2021
(51) Int. Cl.: G05B 19/406

(54) **STATE ESTIMATION DEVICE, SYSTEM, AND MANUFACTURING METHOD**
ZUSTANDSSCHÄTZUNGSVORRICHTUNG, SYSTEM UND HERSTELLUNGSVERFAHREN
DISPOSITIF D'ESTIMATION D'ÉTAT, SYSTÈME ET PROCÉDÉ DE FABRICATION

(30) Priority: 07.02.2020 JP 2020019639
(43) Date of publication of application: 11.08.2021
(73) Proprietor: Kabushiki Kaisha Yaskawa Denki, Kitakyushu-shi, Fukuoka 806-0004 (JP)
(72) Inventor: YOKOYA, Tsuyoshi, Kitakyushu-shi, Fukuoka, 806-0004 (JP); SHIMAMURA, Takashi, Kitakyushu-shi, Fukuoka, 806-0004 (JP)
(74) Representative: Grünecker Patent- und Rechtsanwälte PartG mbB

(56) References cited:
- WO-A1-2019/045699
- US-A1- 2017 315 533
- US-A1- 2019 235 472
- ZHANG Y ET AL: "Sensor fault detection for industrial systems using a hierarchical clustering-based graphical user interface", MULTISENSOR FUSION AND INTEGRATION FOR INTELLIGENT SYSTEMS (MFI), 2012 IEEE CONFERENCE ON, IEEE, 13 September 2012 (2012-09-13), pages 389-394, XP032470302, DOI: 10.1109/MFI.2012.6343071 ISBN: 978-1-4673-2510-3
- LIU LIANSHENG ET AL: "Data-Driven Remaining Useful Life Prediction Considering Sensor Anomaly Detection and Data Recovery", IEEE ACCESS, vol. 7, 15 May 2019 (2019-05-15), pages 58336-58345, XP011724726, DOI: 10.1109/ACCESS.2019.2914236 [retrieved on 2019-05-13]

## Description

### BACKGROUND

### 1. TECHNICAL FIELD

The present invention relates to a state estimation device, a system, and a manufacturing method.

### 2. RELATED ART

A technique for judging whether a work machine is out of order based on output data from a sensor for detecting a state of the work machine or its surrounding environment has been known (for example, see Patent document 1).
US 2017/315533 A1 relates to a machine tool control device for driving a fed or main axis by a motor. In particular, a sensor provided in the vicinity of the motor outputs pulse signals (A signals, B signals, and one-rotation signals). The control device comprises a feedback counter and an anomaly cause determination unit. The pulse signals are obtained by the feedback counter to calculate a feedback count value. The anomaly cause determination unit compares the feedback count value with an anomaly determination reference value to determine the status of the sensor.
WO 2019/045699 A1 relates to monitoring of a system using sensor values. In particular, if a measured sensor value and an expected value deviate by more than a predetermined amount, a fault detection alarm is generated to indicate that the system is not operating within a normal operating range.
US 2019/235472 A1 relates to determination of an abnormality in a temperature sensor. In particular, pattern indicating the temperature change relative to machining time from temperature data, and a stored normal pattern indicating the temperature change relative to machining time of machining classification of a determined machine tool are compared. Based on a result of the comparison, an abnormality of the temperature sensor is determined.
Zhang et al, "Sensor Fault Detection for Industrial Systems Using a Hierarchical Clustering-based Graphical User Interface", 2012 IEEE Conference on Multisensor Fusion and Integration for Intelligent Systems (MFI), relates to sensor fault detection and identification within a large group of sensors. In particular, for sensors arranged at a gas turbine system, sensor fault detection and identification is performed by a hierarchical clustering-based user interface.
Data-Driven Remaining Useful Life Prediction Considering Sensor Anomaly Detection and Data Recovery, IEEE Access, 2019, relates to remaining useful life prediction in engineering systems. In particular, it is detected whether data of a selected sensor are anomalous. Anomalous data are then recovered and used for a remaining useful life analysis.

### [Prior Art Document]

### [Patent document]

[Patent document 1] Japanese Patent Application Publication No. 2017-033526

### SUMMARY

The invention is set out in the appended set of claims.

### BRIEF DESCRIPTION OF THE DRAWINGS

Fig. 1 schematically shows one example of a system 10.
Fig. 2 schematically shows one example of the system 10.
Fig. 3 schematically shows one example of a processing flow by a machine controller 100.
Fig. 4 schematically shows one example of an estimation table 130.
Fig. 5 schematically shows one example of a processing flow by the machine controller 100.
Fig. 6 schematically shows one example of a processing flow by the machine controller 100.
Fig. 7 schematically shows one example of a flow of a method of manufacturing a manufacture item by the system 10.
Fig. 8 schematically shows one example of increase tendency data 400.
Fig. 9 schematically shows one example of the system 10.
Fig. 10 schematically shows one example of the system 10.
Fig. 11 schematically shows one example of a hardware configuration of a computer 1200 configured to function as the machine controller 100 or a management server 500.

### DESCRIPTION OF EXEMPLARY EMBODIMENTS

Hereinafter, the present invention will be described through embodiments of the invention, but the following embodiments do not limit the invention according to the claims. In addition, not all combination of the features described in the embodiments are necessary for the solution of the invention.

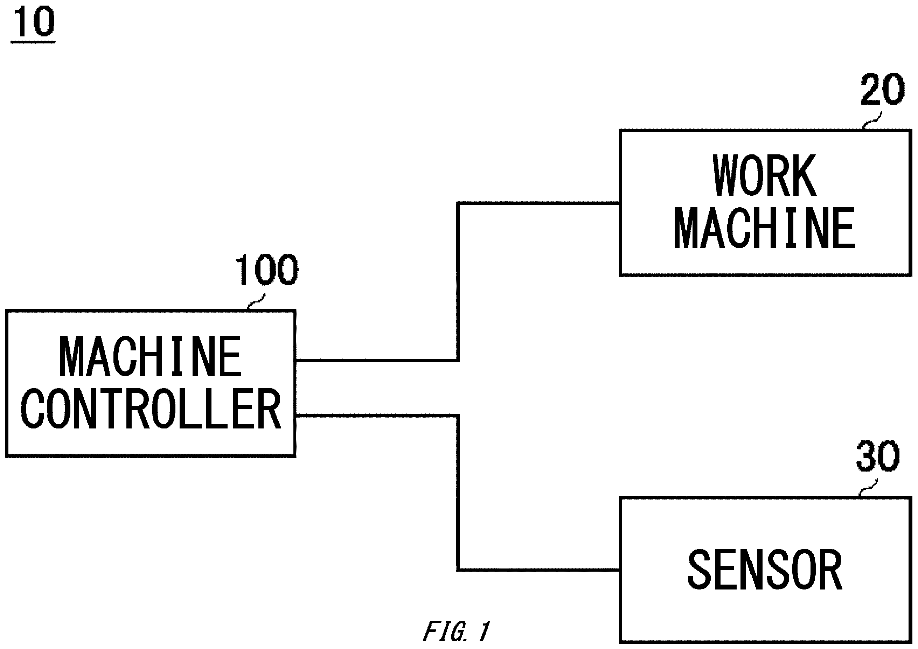

Fig. 1 schematically shows one example of a system 10. The system 10 includes a work machine 20, a sensor 30, and a machine controller 100.

The work machine 20 is a machine configured to perform any operation. The work machine 20 may be a robot. For example, the work machine 20 is configured to perform any operation, such as machining and assembly, on a work. The work may be a one piece part, a semi-finished product obtained by combining a plurality of parts, or a product obtained by combining a plurality of parts. The work machine 20 may be a manufacturing apparatus for manufacturing a manufacture item. The manufacture item may be any article that is machined by the work machine 20.

The sensor 30 is configured to output a sensor value related to an operation by the work machine 20. For example, the sensor 30 is configured to detect a state of the work machine 20 that is performing an operation, and output a sensor value indicating the detected state. In addition, for example, the sensor 30 is configured to detect a state of the surrounding environment of the work machine 20 that is performing an operation, and output a sensor value indicating the detected state.

The sensor 30 may be a sensor incorporated into the work machine 20. The sensor 30 may be a sensor arranged outside the work machine 20. For example, the sensor 30 includes at least any one of a force sensor, an acceleration sensor, a distortion sensor, a pressure sensor, a gyro sensor, a distance sensor, an imaging sensor, a temperature sensor, a humidity sensor, a sound collection sensor, a light amount sensor, a viscosity sensor, a flow sensor, a light amount sensor, and an odor sensor.

The machine controller 100 is configured to control the work machine 20. The machine controller 100 may control the work machine 20 based on the sensor value acquired from the sensor 30. Controlling the work machine 20 based on the sensor value may include controlling the work machine 20 based on a derived value derived from the sensor value. For example, the derived value may be a value obtained by applying a processing, such as filtering, to the sensor value. The form of connection between the machine controller 100 and the work machine 20 may be wired connection or may be wireless connection. Also, the form of connection between the machine controller 100 and the sensor 30 may be wired connection or may be wireless connection. In a case where the sensor 30 is incorporated into the work machine 20, the machine controller 100 may receipt the sensor value outputted by the sensor 30 from the machine controller 100.

A conventional system judges that an abnormality has occurred in the work machine when the sensor value indicates an abnormality, and notifies the administrator or the like to that effect. Here, the cause of the sensor value indicating an abnormality may be an abnormality occurring in the sensor itself, besides an abnormality occurring in the work machine. However, conventionally, this point is not considered and the control of the work machine is performed assuming that the sensor value itself is correct. That is, the conventional system sometimes has had difficulty to precisely know the actual state.

The machine controller 100 according to the present embodiment is configured to, while controlling the work machine 20 based on the sensor value acquired from the sensor 30, estimate a state of the sensor 30 based on the sensor value. This can make it possible to, while controlling the work machine 20, know the state of the sensor 30 that outputs the sensor value based on which the work machine 20 is controlled. Estimating the state of the sensor 30 based on the sensor value may include estimating the state of the sensor 30 based on the derived value derived from the sensor value. Alternatively, the sensor value is not limited to an output value from the sensor itself, and a derived value obtained through a primary processing such as filtering is allowed to be used as the sensor value as appropriate.

The machine controller 100 is configured to estimate whether the sensor 30 is in an abnormal state based on the sensor value. The machine controller 100 is configured to estimate whether the sensor 30 is in an abnormal state based on an operation that satisfies a condition in which the sensor value indicates an abnormality (which may be described as an abnormal operation) among a plurality of operations by the work machine 20 based on the sensor value. For example, the machine controller 100 is configured to, in case where the percentage of abnormal operations among the plurality of operations is lower than a predetermined percentage, estimate that the sensor 30 is not in an abnormal state but disturbance in the operation or the like is the cause. The machine controller 100 is configured to estimate that the sensor 30 is in an abnormal state, in a case where the percentage of abnormal operations among the plurality of operations is higher than the predetermined percentage.

For example, it can be said that, in a case where only one operation among the plurality of operations satisfies the condition in which the sensor value of the sensor 30 indicates an abnormality, it is likely that the abnormality is effected by disturbance or the like in the operation. On the other hand, it can be said that, in a case where many operations among the plurality of operations satisfy the condition in which the sensor value of the sensor 30 indicates an abnormality, it is likely that an abnormality has occurred in the sensor 30 itself. The machine controller 100 can provide an estimation result based on such observation.

The machine controller 100 may be one example of the state estimation device. Note that, the machine controller for controlling the work machine 20 and the state estimation device may be configured as separate bodies. In this case, the state estimation device may acquire the sensor value from the machine controller. In addition, the state estimation device may control the work machine 20 by sending an instruction based on the acquired sensor value to the machine controller.

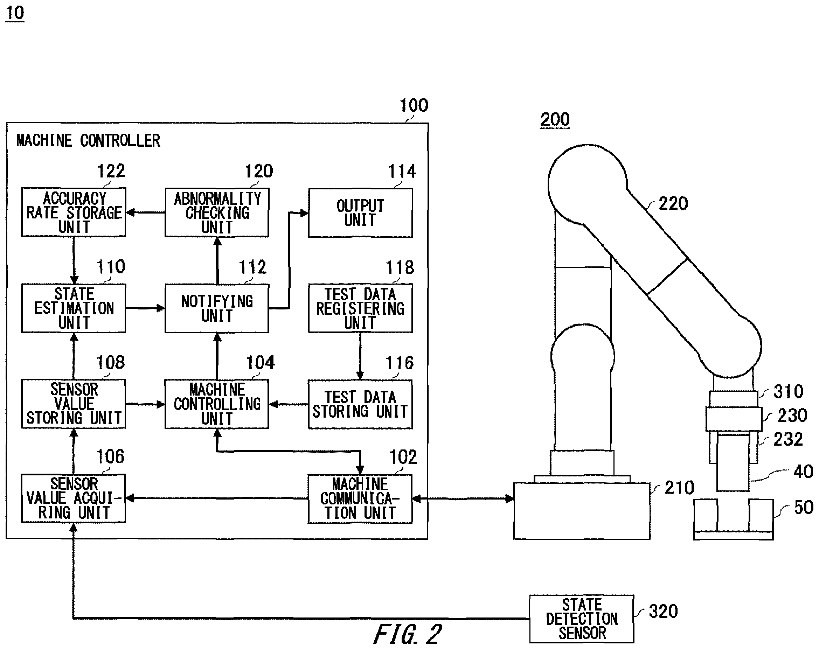

Fig. 2 schematically shows one example of the system 10. The system 10 shown in Fig. 2 includes a machine controller 100, a robot 200, and a state detection sensor 320.

The robot 200 may be one example of the work machine 20. The robot 200 illustrated in Fig. 2 is configured to perform a fitting operation for fitting a work 40 that is a fitting member into a work 50 that is a fitted member. Robot 200 includes a platform 210, an arm 220, a hand 230, and a force sensor 310.

The arm 220 is placed on the platform 210 and has a plurality of structural members. An actuator is arranged in the interior of each of the structural members, and each of the plurality of structural members rotatably driven by the actuator using a joint as its articulation.

The hand 230 is arranged at the tip of the arm 220 and is rotatably driven by the actuator in the interior of the structural member at the tip of the arm 220. The hand 230 has a gripping claw 232, and is configured to grip the work 40 by the gripping claw 232.

The force sensor 310 is arranged between the arm 220 and the hand 230. The force sensor 310 may be a so-called six-axis force sensor that can detect six components in total including force components in translational three axes directions and moment components around rotational three axes acting on a detected portion. The force sensor 310 may be one example of the sensor 30.

The state detection sensor 320 is arranged outside the robot 200. The state detection sensor 320 is configured to detect a state of the robot 200 or a state of the surrounding environment of the robot 200. The state detection sensor 320 may be one example of the sensor 30.

The machine controller 100 is configured to control the robot 200. The machine controller 100 includes a machine communication unit 102, a machine controlling unit 104, a sensor value acquiring unit 106, a sensor value storing unit 108, a state estimation unit 110, a notifying unit 112, an output unit 114, a test data storing unit 116, a test data registering unit 118, an abnormality checking unit 120, and an accuracy rate storage unit 122. Note that the machine controller 100 does not necessarily include all of these.

The machine communication unit 102 is configured to communicate with the robot 200. The machine communication unit 102 may communicate with the robot 200 by wired communication or may communicate with the robot 200 by wireless communication.

The machine controlling unit 104 is configured to control the robot 200. The machine controlling unit 104 may control the robot 200 by sending various types of instruction via the machine communication unit 102. The machine controlling unit 104 is configured to acquire a sensor value outputted by the force sensor 310 via the machine communication unit 102, and control the robot 200 based on the sensor value. For example, the machine controlling unit 104 may estimate the state of the robot 200 based on the sensor value outputted by the force sensor 310. The machine controlling unit 104 may control the robot 200 based on an estimation result.

The sensor value acquiring unit 106 is configured to acquire a sensor value. The sensor value acquiring unit 106 may acquire a sensor value outputted by a sensor incorporated into the robot 200 via the machine communication unit 102. The sensor value acquiring unit 106 is configured to acquire a sensor value outputted by the force sensor 310 via the machine communication unit 102.

In addition, the sensor value acquiring unit 106 is configured to acquire a sensor value outputted by the state detection sensor 320. The sensor value acquiring unit 106 may communicate with the state detection sensor 320 by wired communication or may communicate with the state detection sensor 320 by wireless communication.

The sensor value storing unit 108 is configured to store the sensor value acquired by the sensor value acquiring unit 106. The sensor value storing unit 108 may store a derived value derived from the sensor value acquired by the sensor value acquiring unit 106. The sensor value storing unit 108 may store a history of the sensor value. The sensor value storing unit 108 may store a history of the derived value. The sensor value storing unit 108 may be one example of the history storage unit.

The machine controlling unit 104 may control the robot 200 based on the sensor value outputted by the state detection sensor 320 and stored in the sensor value storing unit 108. The machine controlling unit 104 may control the robot 200 according to at least any one state of the state of the robot 200 and the state of the surrounding environment of the robot 200 shown by the sensor value. The machine controlling unit 104 may estimate the state of the robot 200 based on the sensor value outputted by the state detection sensor 320. The machine controlling unit 104 may control the robot 200 based on an estimation result.

For example, the machine controlling unit 104 is configured to estimate the state of the robot 200 based on at least any one of the sensor value outputted by the force sensor 310 and the sensor value outputted by the state detection sensor 320. The machine controlling unit 104 may estimate the state of the robot 200 based on the sensor value using a well-known technique. For example, the machine controlling unit 104 is configured to estimate whether the robot 200 is in a normal condition or in an abnormal state. In addition, the machine controlling unit 104 may estimate a failure predicted timing of the robot 200.

The state estimation unit 110 is configured to estimate a state of the force sensor 310. The state estimation unit 110 may estimate the state of the force sensor 310 based on the sensor value stored in the sensor value storing unit 108 and outputted by the force sensor 310. For example, the state estimation unit 110 is configured to estimate whether the force sensor 310 is in an abnormal state. For example, the state estimation unit 110 is configured to estimate a degree of reliability of the force sensor 310.

For example, the state estimation unit 110 is configured to estimate the state of the force sensor 310 by comparing the sensor value outputted by the force sensor 310 while the robot 200 is performing an operation (which may be described as an operational sensor value) and a pre-stored sensor value (which may be described as a stored sensor value). The operational sensor value may be a sensor value based on an output from the force sensor 310 while the robot 200 is performing an operation. The operational sensor value may be a sensor output value itself outputted by the force sensor 310 while the robot 200 is performing an operation, and may also be a derived value derived by somehow processing a sensor output outputted by the force sensor 310 while the robot 200 is performing an operation. For example, the stored sensor value is a sensor value outputted by the force sensor 310 while the robot 200 is performing an operation in a situation in which it is confirmed that the force sensor 310 is in the normal condition. For example, the state estimation unit 110 is configured to store, as the stored sensor value, a sensor value outputted by the force sensor 310 while the robot 200 is performing an operation in a situation in which it is confirmed that the force sensor 310 is in the normal condition after the robot 200 is placed at the workstation.

For example, the state estimation unit 110 is configured to estimate the state of the force sensor 310 by comparing an operational waveform data comprised of operational sensor values in time series and a stored waveform data comprised of stored sensor values in time series. For example, the state estimation unit 110 is configured to estimate that the force sensor 310 is in the abnormal state when the number of times that the difference between the operational waveform data and the stored waveform data exceeds a predetermined threshold is more than a predetermined number of times during one operation, and estimate that the force sensor 310 is in the normal condition when it is less than the predetermined number of times. In addition, for example, the state estimation unit 110 is configured to estimate the degree of reliability of the force sensor 310 such that, the larger the difference between the operational waveform data and the stored waveform data becomes, the lower the degree of reliability of the force sensor 310 becomes.

The state estimation unit 110 may estimate the state of the force sensor 310 by utilizing machine learning. For example, the state estimation unit 110 generates a normal distribution of a group of sensor values outputted by the force sensor 310 while the robot 200 is performing an operation in a situation in which it is confirmed that the force sensor 310 is in the normal condition, and uses the normal distribution as reference data. Then, the state estimation unit 110 estimates that the force sensor 310 is in the abnormal state when the operational sensor value deviates from the normal distribution of the reference data by an amount equal to or more than a threshold. In addition, the state estimation unit 110 estimates the degree of reliability of the force sensor 310 such that, the more the operational sensor value deviates from the normal distribution of the reference data, the lower the degree of reliability of the force sensor 310 becomes. Alternatively, the state estimation unit 110 generates a probability distribution or an expected value based on a group of sensor values outputted by the force sensor 310 while the robot 200 is performing an operation in a situation in which it is confirmed that the force sensor 310 is in the normal condition, and uses the probability distribution or the expected value as reference data. Then, the state estimation unit 110 estimates that the force sensor 310 is in the abnormal state when the operational sensor value deviates from the reference data by an amount equal to or more than a threshold. In addition, the state estimation unit 110 estimates the degree of reliability of the force sensor 310 such that, the more the operational sensor value deviates from the reference data, the lower the degree of reliability of the force sensor 310 becomes.

The state estimation unit 110 may collect a group of sensor values in a situation in which it is confirmed that the force sensor 310 is in the normal condition and a group of sensor values in a situation in which it is confirmed that the force sensor 310 is in the abnormal state, and generate a machine learning model based on these groups of values. Besides, the state estimation unit 110 may utilize various well-known machine learning algorithms.

The state estimation unit 110 may estimate the state of the force sensor 310 based on an abnormal operation among a plurality of operations by the robot 200 based on the sensor value of the force sensor 310. The plurality of operations by the robot 200 may be a plurality of types of operations. For example, the plurality of operations include air cutting, butting, exploration, and insertion in a fitting operation.

The state estimation unit 110 may judge, for each of the plurality of operations, whether a condition in which the operational sensor value indicates an abnormality is satisfied, by comparing an operational sensor value and a stored sensor value that is pre-stored associated with each of the plurality of operations. The state estimation unit 110 may judge that the condition in which the operational sensor value indicates an abnormality is satisfied, when the difference between the operational sensor value and the stored sensor value is larger than a predetermined threshold. By preparing a stored sensor value for each of the plurality of operations, an operational abnormality can be estimated with high accuracy.

For example, the state estimation unit 110 judges that the condition in which the operational sensor value indicates an abnormality is satisfied, when the difference between the operational waveform data comprised of operational sensor values in time series and stored waveform data comprised of stored sensor values in time series is larger than a predetermined threshold. In a case where the difference between the operational waveform data and the stored waveform data exceeds the predetermined threshold multiple times, the state estimation unit 110 may judge that the condition in which the operational sensor value indicates an abnormality is satisfied when the average value of the difference is larger than a predetermined threshold.

The state estimation unit 110 may judge whether the condition in which the operational sensor value indicates an abnormality is satisfied by utilizing machine learning. For example, the state estimation unit 110 compares reference data, which is generated from a group of sensor values outputted by the force sensor 310 while the robot 200 is performing the operation in a situation in which it is confirmed that the force sensor 310 is in the normal condition, and an operational sensor value. Then, the state estimation unit 110 judges that the condition in which the operational sensor value indicates an abnormality is satisfied when the difference between the reference data and the operational sensor value is larger than a predetermined threshold. Besides, the state estimation unit 110 may utilize various well-known machine learning algorithms.

For example, the state estimation unit 110 estimates whether the force sensor 310 is in the abnormal state based on the percentage of abnormal operations among the plurality of operations by the robot 200 based on the sensor value of the force sensor 310. For example, the state estimation unit 110 estimates that the force sensor 310 is in the abnormal state when all of the plurality of operations is the abnormal operation, and otherwise estimates that the force sensor 310 is not in the abnormal state.

In addition, for example, the state estimation unit 110 estimates that the force sensor 310 is in the abnormal state when the percentage of abnormal operations among the plurality of operations is equal to or larger than a predetermined percentage. The state estimation unit 110 may estimate that it is not an abnormality in the force sensor 310 but an abnormality in each operation caused by disturbance or the like, when the percentage of abnormal operations among the plurality of operations is smaller than the predetermined percentage.

The predetermined percentage may be arbitrarily settable by the administrator of the system 10 or the like. In addition, the state estimation unit 110 may set the predetermined percentage. For example, the state estimation unit 110 acquires a group of sensor values outputted by the force sensor 310 while the robot 200 is performing a plurality of operations many times in a situation in which it is confirmed that the force sensor 310 is in the abnormal state. Then, the state estimation unit 110 determines the percentage of abnormal operations among the plurality of operations based on the group of sensor values, and sets the predetermined percentage based on the determined percentage. For example, when the determined percentage is 75%, the state estimation unit 110 sets the predetermined percentage as 70%. Thus, the percentage based on an actual situation can be set and this can contribute to improvement of estimation accuracy of the abnormal state of the force sensor 310.

The state estimation unit 110 may estimate the degree of reliability of the force sensor 310 based on the percentage of abnormal operations among the plurality of operations by the robot 200 based on the sensor value of the force sensor 310. For example, the state estimation unit 110 estimates the degree of reliability of the force sensor 310 such that, the higher the percentage of abnormal operations becomes, the lower the degree of reliability of the force sensor 310 becomes.

The state estimation unit 110 may estimate that the force sensor 310 is in the abnormal state in a case where the condition in which the sensor value indicates an abnormality is satisfied in a plurality of operations during a predetermined period among the plurality of operations by the robot 200 based on the sensor value of the force sensor 310. Thus, an estimate can executed based on the observation that it is likely that it is an abnormality of the force sensor 310 when an abnormality is detected in a plurality of operations at the same timing, and this can contribute to improvement of estimation accuracy.

The predetermined period may be arbitrarily settable. The predetermined period may be set according to the type of operation performed by the robot 200. In addition, the state estimation unit 110 may set the predetermined period. For example, the state estimation unit 110 acquires a group of sensor values outputted by the force sensor 310 while the robot 200 is performing a plurality of operations many times in a situation in which it is confirmed that the force sensor 310 is in the abnormal state. Then, the state estimation unit 110 determines a period during which a plurality of operations satisfy a condition in which the sensor value indicates an abnormality, and sets the predetermined percentage based on the determined period. For example, when the determined period is four minutes, the state estimation unit 110 sets the predetermined period as five minutes.

The state estimation unit 110 may estimate the state of the force sensor 310 based on a history of the operational sensor value stored in the sensor value storing unit 108. The state estimation unit 110 may estimate a failure timing of the force sensor 310 based on a history of the operational sensor value.

For example, the state estimation unit 110 estimates the failure timing of the force sensor 310 based on the increase rate when the difference between the operational sensor value and the stored sensor value is increased in time series in a plurality of operations by the robot 200 based on the sensor value of the force sensor 310. For example, the state estimation unit 110 estimates a future increase rate of the difference between the operational sensor value and the stored sensor value based on the increase rate of the difference between the operational sensor value and the stored sensor value. Then, the state estimation unit 110 estimates, as the failure timing, a timing when the difference between the operational sensor value and the stored sensor value becomes larger than a predetermined threshold.

The state estimation unit 110 may estimate the state of the force sensor 310 based on a history of the operational derived value stored in the sensor value storing unit 108. The state estimation unit 110 may estimate the failure timing of the force sensor 310 based on the history of the operational derived value and the stored derived value derived from the stored sensor value. The stored derived value may be a value obtained by applying a processing, such as filtering, on the stored sensor value.

For example, the state estimation unit 110 estimates the failure timing of the force sensor 310 based on the increase rate when the difference between the operational derived value and the stored derived value is increased in time series in a plurality of operations by the robot 200 based on the sensor value of the force sensor 310. For example, the state estimation unit 110 estimates a future increase rate of the difference between the operational derived value and the stored derived value based on the increase rate of the difference between the operational derived value and the stored derived value. Then, the state estimation unit 110 estimates, as the failure timing, a timing when the difference between the operational derived value and the stored derived value becomes larger than a predetermined threshold.

The state estimation unit 110 estimates a state of the state detection sensor 320. The state estimation unit 110 may estimate the state of the state detection sensor 320 based on a sensor value outputted by the state detection sensor 320, which is stored in the sensor value storing unit 108. For example, the state estimation unit 110 estimates whether the state detection sensor 320 is in the abnormal state. The state estimation unit 110 may estimate the state of the state detection sensor 320 by a method similar to the method for estimating the state of the force sensor 310. In addition, for example, the state estimation unit 110 estimates a degree of reliability of the state detection sensor 320. The state estimation unit 110 may estimate the degree of reliability of the state detection sensor 320 by a method similar to the method for estimating the degree of reliability of the force sensor 310.

The notifying unit 112 executes a notification processing to notify the state of the robot 200 estimated by the machine controlling unit 104. In addition, the notifying unit 112 executes a notification processing to notify the state of the force sensor 310 estimated by the state estimation unit 110. In addition, the notifying unit 112 executes a notification processing to notify the state of the state detection sensor 320 estimated by the state estimation unit 110.

The output unit 114 may have a display output function. The output unit 114 may include a display. The output unit 114 may have an audio output function. The output unit 114 may include a speaker.

The notifying unit 112 may execute a notification processing to cause the output unit 114 to output the state of the robot 200. For example, the notifying unit 112 executes a notification processing to cause the output unit 114 to output the state of the robot 200 by displaying. The notifying unit 112 may execute a notification processing to cause the output unit 114 to output the state of the robot 200 by audio. Note that the notifying unit 112 may execute a notification processing to cause a display and a speaker or the like outside the machine controller 100 to output the state of the robot 200.

The notifying unit 112 may execute a notification processing to cause the output unit 114 to output the state of the force sensor 310. For example, the notifying unit 112 executes a notification processing to cause the output unit 114 to output the state of the force sensor 310 by displaying. The notifying unit 112 may execute a notification processing to cause the output unit 114 to output the state of the force sensor 310 by audio. Note that the notifying unit 112 may execute a notification processing to cause a display and a speaker or the like outside the machine controller 100 to output the state of the force sensor 310.

The notifying unit 112 may execute a notification processing to cause the output unit 114 to output the state of the state detection sensor 320. For example, the notifying unit 112 executes a notification processing to cause the output unit 114 to output the state of the state detection sensor 320 by displaying. The notifying unit 112 may execute a notification processing to cause the output unit 114 to output the state of the state detection sensor 320 by audio. Note that the notifying unit 112 may execute a notification processing to cause a display and a speaker or the like outside the machine controller 100 to output the state of the state detection sensor 320.

For example, the notifying unit 112 executes a notification processing to notify a combination of the state of the robot 200 estimated based on the sensor value of the force sensor 310 by the machine controlling unit 104 and the state of the force sensor 310 estimated based on the sensor value of the force sensor 310 by the state estimation unit 110. In addition, for example, the notifying unit 112 executes a notification processing to notify a combination of the state of the robot 200 estimated based on the sensor value of the state detection sensor 320 by the machine controlling unit 104 and the state of the state detection sensor 320 estimated based on the sensor value of the state detection sensor 320 by the state estimation unit 110. The notifying unit 112 may be one example of the machine state notifying unit.

For example, the notifying unit 112 causes the output unit 114 to output a combination of at least any one of a letter, a numerical value, a graph, and an image indicating the state of the robot 200 and at least any one of a letter, a numerical value, a graph, and an image indicating the state of the force sensor 310 by displaying. This can make it possible to easily know the state of the robot 200 and the state of the force sensor 310 that provided the basis for estimating the state of the robot 200.

For example, when a notification only indicates that the robot 200 is in the normal condition, a person who receives the notification can only trust it. However, when a notification indicates that the robot 200 is in the normal condition and the force sensor 310 is in the abnormal state, a person who receives the notification can doubt that the robot 200 is in the normal condition. In addition, for example, when a notification indicates that the robot 200 is in the abnormal state and the force sensor 310 is in the abnormal state, a person who receives the notification can know that the robot 200 may have no abnormality.

When a notification indicates that the robot 200 is in the normal condition and the force sensor 310 is in the normal condition, the credibility of the robot 200 being in the normal condition can be improved. In addition, when a notification indicates that the robot 200 is in the abnormal state and the force sensor 310 is in the normal condition, the credibility of the robot 200 being in the abnormal state can be improved.

The notifying unit 112 may execute a notification processing to notify a combination of the state of the robot 200 estimated based on the sensor value of the force sensor 310 by the machine controlling unit 104 and the degree of reliability of the force sensor 310 estimated based on the sensor value of the force sensor 310 by the state estimation unit 110. The notifying unit 112 may execute a notification processing to notify a combination of the state of the robot 200 estimated based on the sensor value of the state detection sensor 320 by the machine controlling unit 104 and the degree of reliability of the state detection sensor 320 estimated based on the sensor value of the state detection sensor 320 by the state estimation unit 110.

For example, the notifying unit 112 causes the output unit 114 to output a combination of at least any one of a letter, a numerical value, a graph, and an image indicating the state of the robot 200 and at least any one of a letter, a numerical value, a graph, and an image indicating the degree of reliability of the force sensor 310 by displaying.

In addition, for example, the notifying unit 112 causes the output unit 114 to output an object indicating the state of the robot 200 by displaying, the object being changed according to the degree of reliability of the force sensor 310. For example, the notifying unit 112 causes the output unit 114 to output an object indicating the state of the robot 200 by displaying, the object being more emphasized as the degree of reliability of the force sensor 310 becomes higher. This can make it possible to know, along with an estimation result of the state of the robot 200, the credibility of the estimation result.

In addition, for example, the notifying unit 112 causes the output unit 114 to output a content indicating the state of the robot 200 by displaying, the content being changed according to the degree of reliability of the force sensor 310. As a specific example, when the failure prediction result of the robot 200 is sixty days later, the notifying unit 112 causes the output unit 114 to output the number of days, which is obtained by adding or subtracting a number of days that becomes bigger as the degree of reliability of the force sensor 310 becomes lower to or from sixty days, by displaying as the failure prediction result of the robot 200.
Thus, an estimation result of the state of the robot 200 on which the degree of reliability of the force sensor 310 is reflected can be provided.

The notifying unit 112 may execute a notification processing to notify a failure timing of the force sensor 310 estimated by the state estimation unit 110. The notifying unit 112 may execute a notification processing to notify a failure timing of the state detection sensor 320 estimated by the state estimation unit 110. These can make it possible to consider a timing that may be convenient as a timing for repairing or exchanging before the force sensor 310 or the state detection sensor 320 becomes out of order.

The test data storing unit 116 stores test data for causing the robot 200 to execute a predetermined action as an action for estimating the state of the force sensor 310. The action for estimating the state of the force sensor 310 may be an action by which it is easier to estimate the state of the force sensor 310. For example, the action by which it is easier to estimate the state of the force sensor 310 may be a relatively simple action that is insusceptible to disturbance, such as a vertical movement of the hand 230 and a lateral movement of the hand 230.

The test data storing unit 116 stores test data for causing the robot 200 to execute a predetermined action as an action for estimating the state of the state detection sensor 320. The action for estimating the state of the state detection sensor 320 may be an action by which it is easier to estimate the state of the state detection sensor 320. For example, the action by which it is easier to estimate the state of the state detection sensor 320 may be an action that is insusceptible to disturbance depending on the type of the state detection sensor 320.

For example, the test data is stored in the test data storing unit 116 by a manufacturer or the like at the time of manufacturing the system 10. The test data may be stored in the test data storing unit 116 at any timing after manufacturing the system 10.

The test data registering unit 118 registers the test data. For example, the test data registering unit 118 accepts a register of the test data by a user of the system 10 or the like after the robot 200 is placed at the workstation.

When the state estimation unit 110 estimates that the force sensor 310 is in the abnormal state, the abnormality checking unit 120 checks whether an abnormality has actually occurred in the force sensor 310. For example, the abnormality checking unit 120 checks whether an abnormality has occurred in the force sensor 310 by accepting a feedback by a person who receives the notification or the like after a notification processing, which indicates that the force sensor 310 is in the abnormal state, is executed by the notifying unit 112. In addition, the abnormality checking unit 120 may have an abnormality sensor for sensing an abnormality of the force sensor 310, and may check whether an abnormality has occurred in the force sensor 310 according to a detection result by the abnormality sensor.

The abnormality checking unit 120 may record a check result in association with basis information indicating a basis on which the state estimation unit 110 estimated that the force sensor 310 is in the abnormal state. Then, the abnormality checking unit 120 may derive an accuracy rate of the estimation result based on the check results over multiple times.

The abnormality checking unit 120 checks whether an abnormality has actually occurred in the state detection sensor 320, when the state estimation unit 110 estimates that the state detection sensor 320 is in the abnormal state. For example, the abnormality checking unit 120 checks whether an abnormality has occurred in the state detection sensor 320 by accepting a feedback by a person who receives the notification or the like after a notification processing, which indicates the state detection sensor 320 is in the abnormal state, is executed by the notifying unit 112. In addition, the abnormality checking unit 120 may have an abnormality sensor for sensing an abnormality of the state detection sensor 320, and may check whether an abnormality has occurred in the state detection sensor 320 according to a detection result by the abnormality sensor.

The abnormality checking unit 120 may record a check result in association with basis information indicating the basis on which the state estimation unit 110 estimated that the state detection sensor 320 is in the abnormal state. Then, the abnormality checking unit 120 may derive an accuracy rate of the estimation result based on the check results over multiple times.

The accuracy rate storage unit 122 stores, in association with each other, basis information indicating the basis on which the state estimation unit 110 estimated that the force sensor 310 is in the abnormal state and an accuracy rate of the estimation result derived by the abnormality checking unit 120. The state estimation unit 110 may estimate whether the force sensor 310 is in the abnormal state based on information stored in the accuracy rate storage unit 122.

For example, the state estimation unit 110 estimates whether the force sensor 310 is in the abnormal state based on the operation that satisfies the condition in which the sensor value indicates an abnormality among the plurality of operations by the robot 200 based on the sensor value of the force sensor 310, and the basis information and the accuracy rate. As a specific example, in a case where the accuracy rate of the estimation result, which estimates that the force sensor 310 is in the abnormal state on the basis that the percentage of operations that satisfy the condition in which the sensor value indicates an abnormality among the plurality of operations by the robot 200 based on the sensor value of the force sensor 310 is higher than 60%, is lower than a predetermined threshold, the state estimation unit 110 changes the threshold to a value that is higher than 60%. Thus, in a case where the percentage of operations that satisfy the condition in which the sensor value indicates an abnormality is higher than 60% but lower than the changed threshold, it can be estimated that the force sensor 310 is not in the abnormal state. Performing such adjustment of the threshold can contribute to improvement of estimation accuracy.

The accuracy rate storage unit 122 stores, in association with each other, basis information indicating the basis on which the state estimation unit 110 estimated that the state detection sensor 320 is in the abnormal state and an accuracy rate of the estimation result derived by the abnormality checking unit 120. The state estimation unit 110 may estimate whether the state detection sensor 320 is in the abnormal state by executing an estimation processing similar to the estimation processing for estimating whether the force sensor 310 is in the abnormal state based on the information stored in the accuracy rate storage unit 122.

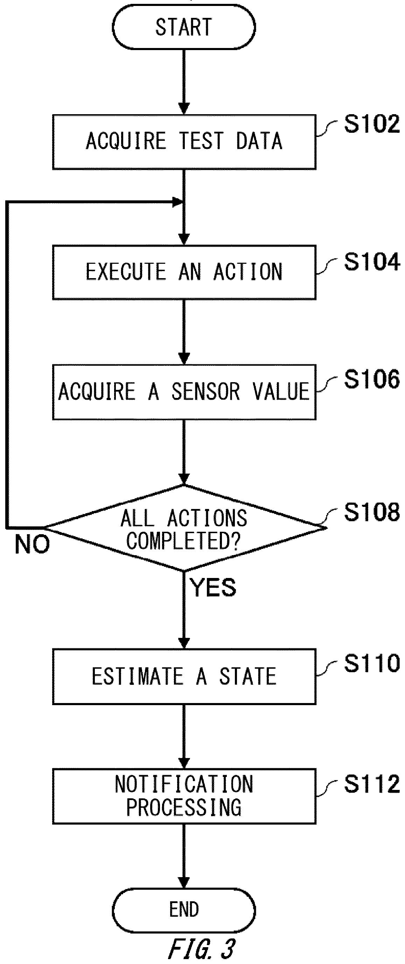

Fig. 3 schematically shows one example of a processing flow by the machine controller 100. Described here is a processing flow in which the state estimation unit 110 estimates a state of the force sensor 310 based on a sensor value outputted by the force sensor 310 while the machine controlling unit 104 is causing the robot 200 to perform a predetermined action as an action for estimating the state of the force sensor 310.

At Step (Step may be abbreviated as S) 102, the machine controlling unit 104 acquires, from the test data storing unit 116, test data in which a plurality of actions are registered. At S104, the machine controlling unit 104 causes the robot 200 to execute one of the plurality of actions registered in the test data.

At S106, the sensor value acquiring unit 106 acquires and stores a sensor value outputted by the force sensor 310 in the sensor value storing unit 108. When all of the plurality of actions registered in the test data is completed (YES at S108), the process proceeds to S110, and, when not all of the plurality of actions registered in the test data is completed (NO at S108), the process returns to S104.

At S110, the state estimation unit 110 estimates a state of the force sensor 310 based on the sensor value acquired at S106. At S112, the notifying unit 112 executes a notification processing to notify the state of the force sensor 310 estimated at S110.

As described above, by causing the robot 200 to execute an action by which it is easier to estimate the state of the force sensor 310 according to the test data, estimation accuracy of the state of the force sensor 310 can be improved. The machine controller 100 may execute a processing shown in Fig. 3, according to the instruction of the administrator of the system 10 or the like. In addition, the machine controller 100 may execute the processing shown in Fig. 3 regularly or irregularly.

The test data registering unit 118 may generate the test data. For example, the test data registering unit 118 generates test data for the force sensor 310 based on the sensor value of the force sensor 310 while the robot 200 is executing each of the plurality of types of actions. Generating the test data based on the sensor value may include generating the test data based on a derived value derived from the sensor value.

For example, firstly, the machine controlling unit 104 causes the robot 200 to execute a plurality of types of actions that the robot 200 can execute. The machine controlling unit 104 may cause the robot 200 to execute all types of actions that the robot 200 can execute. Then, the sensor value acquiring unit 106 acquires and stores the sensor value of the force sensor 310 while the robot 200 is executing each of the plurality of types of actions in the sensor value storing unit 108.

The test data registering unit 118 may generate the test data based on the sensor value of the force sensor 310 while the robot 200 is executing each of the plurality of types of actions. For example, the test data registering unit 118 determines an action in which usage frequency of the force sensor 310 is low, among the plurality of types of actions. For example, the test data registering unit 118 determines a predetermined number of actions in the order that usage frequency of the force sensor 310 is low. Then, the test data registering unit 118 generates test data for causing the robot 200 to execute the determined actions. It is likely that the force sensor 310 is in the abnormal state, in a case where the force sensor 310 frequently outputs the sensor value although an action in which usage frequency of the force sensor 310 is low is being executed. Therefore, using the test data can make it easier to estimate that the force sensor 310 is in the abnormal state.

For example, the test data registering unit 118 determines an action which has a smaller sensor value of the force sensor 310 among the plurality of types of actions. For example, the test data registering unit 118 determines a predetermined number of actions in the order that the sensor value of the force sensor 310 is smaller. Then, the test data registering unit 118 generates the test data for causing the robot 200 to execute the determined actions. It is likely that the force sensor 310 is in the abnormal state, in a case where the sensor value outputted by the force sensor 310 is large although an action in which the sensor value of the force sensor 310 is small is being executed. Therefore, using the test data can make it easier to estimate that the force sensor 310 is in the abnormal state.

The test data registering unit 118 may generate test data for the state detection sensor 320 based on the sensor value of the state detection sensor 320 while the robot 200 is executing each of the plurality of types of actions. The test data registering unit 118 may generate the test data for the state detection sensor 320 by a method similar to the method for generating the test data for the force sensor 310.

In addition, the test data registering unit 118 may be configured to determine an action in which the sensor value of the force sensor 310 is insusceptible to disturbance or the like, among the plurality of types of actions. For example, for an action that is utilized multiple times, the test data registering unit 118 determines an action in which the variation of values based on the sensor values of the force sensor 310 is smaller than a threshold. Then, the test data registering unit 118 generates test data for causing the robot 200 to execute the determined action.

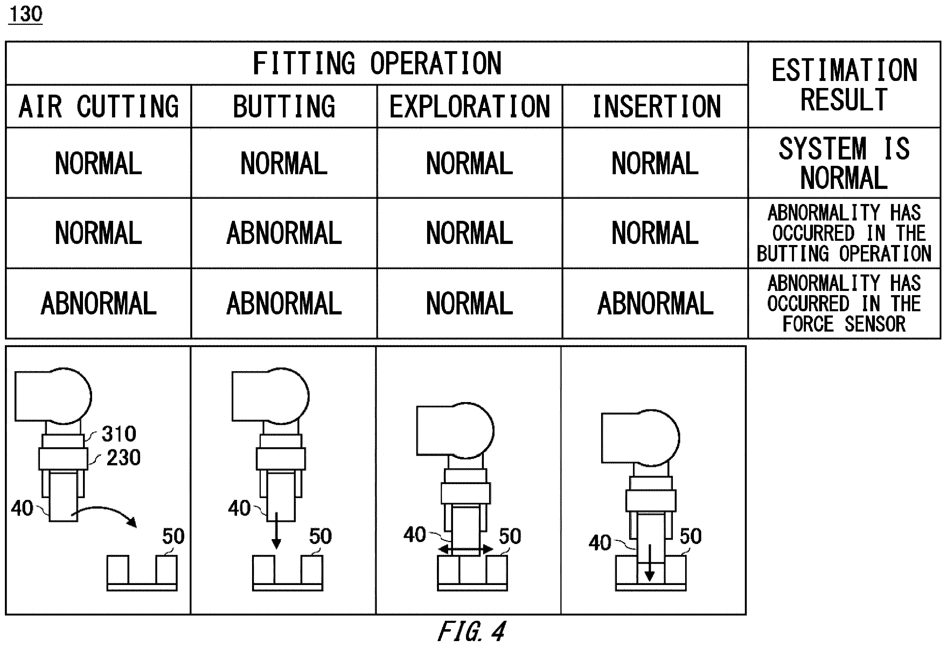

Fig. 4 schematically shows one example of an estimation table 130. Illustrated here is the estimation table 130 for estimating a state of the force sensor 310 based on a combination of operations that satisfy the condition in which the sensor value of the force sensor 310 indicates an abnormality among four types of operation included in a fitting operation. The state estimation unit 110 may estimate the state of the force sensor 310 based on the estimation table 130.

For example, the state estimation unit 110 estimates that an abnormality has occurred in the force sensor 310, when the condition in which the sensor value indicates an abnormality is satisfied in air cutting, butting, and insertion among air cutting, butting, exploration, and insertion. The state estimation unit 110 may estimate that it is not an abnormality of the force sensor 310 but an abnormality has occurred in the butting action, when the condition in which the sensor value indicates an abnormality is satisfied only in butting among air cutting, butting, exploration, and insertion. The state estimation unit 110 may estimate whether the force sensor 310 is abnormal based on a combination of abnormal operations among the plurality of operations.

The estimation table 130 may be registered by a person. For example, the estimation table 130 is registered by an administrator of the system 10 and an operation assistant who assists an operation by the robot 200 or the like. For example, the registerer who registers the estimation table 130 registers the estimation table 130 such that the state estimation unit 110 estimates that the force sensor 310 is in the abnormal state when the percentage of abnormal operations among the plurality of operations is higher than a predetermined percentage and estimates that an abnormality has occurred in each action when the percentage of abnormal operations among the plurality of operations is lower than the predetermined percentage.

In addition, in a case where the registerer feels from his/her experience that it is likely that the force sensor 310 is in the abnormal state when the condition in which the sensor value indicates an abnormality is satisfied in a first operation and a second operation among the plurality of operations, the registerer can register the estimation table 130 on which the experience is reflected. In this way, by the state estimation unit 110 executing estimation using the estimation table 130, estimation based on the experience of the administrator of the system 10 and the operation assistant of the robot 200 or the like can be executed.

The registerer may register the estimation table 130 such that it is estimated that the force sensor 310 is in the abnormal state when the condition in which the sensor value indicates an abnormality is satisfied in one or plurality of operations that are insusceptible to disturbance or the like among the plurality of operations. Thus, estimation can be executed which is based on the observation that it is likely that the force sensor 310 is in the abnormal state when the condition in which the sensor value of the force sensor 310 indicates an abnormality is satisfied in an operation that is insusceptible to disturbance or the like, and this can contribute to improvement of estimation accuracy.

The state estimation unit 110 may generate the estimation table 130. For example, in a situation in which it is confirmed that the force sensor 310 is in the abnormal state, the machine controlling unit 104 causes the robot 200 to execute a fitting operation, and the sensor value acquiring unit 106 acquires and stores the sensor value of the force sensor 310 in the sensor value storing unit 108. The state estimation unit 110 estimates and records whether the condition in which the sensor value indicates an abnormality is satisfied in each of the plurality of operations, based on the sensor value stored in the sensor value storing unit 108. Then, the state estimation unit 110 generates an estimation table 130 in which a combination of operations that satisfy the condition in which the sensor value indicates an abnormality is associated with an estimation result indicating that an abnormality has occurred in the force sensor 310.

For example, in one fitting operation, when there are a case where the condition in which the sensor value indicates an abnormality is satisfied in all of the plurality of operations and a case where the condition in which the sensor value indicates an abnormality is not satisfied only in the exploration among the plurality of operations, the state estimation unit 110 generates an estimation table 130 on which the result is reflected. Specifically, the state estimation unit 110 generates the estimation table 130 by which the state estimation unit 110 estimates that it is an abnormality in the force sensor 310 when all of the plurality of operations are abnormal and when only the exploration among the plurality of operations is normal and estimates that other abnormalities are abnormalities in the operation. Thus, the estimation can be executed which is based on a combination of operations that satisfy the condition in which the sensor value indicates an abnormality that actually occurs when the force sensor 310 is in the abnormal state, and this can contribute to improvement of estimation accuracy.

The notifying unit 112 may execute a notification processing to notify an estimation result and information indicating an operation that satisfies the condition in which the sensor value of the force sensor 310 indicates an abnormality, when the state estimation unit 110 estimates that the force sensor 310 is in the abnormal state. The notifying unit 112 may be one example of the sensor state notifying unit.

For example, the notifying unit 112 executes a notification processing to notify that the state estimation unit 110 estimated that the force sensor 310 is in the abnormal state on the basis that the percentage of abnormal operations among the plurality of operations is higher than a predetermined percentage. In addition, for example, the notifying unit 112 executes a notification processing to notify that the state estimation unit 110 estimated that the force sensor 310 is in the abnormal state on the basis that the condition in which the sensor value of the force sensor 310 indicates an abnormality is satisfied in air cutting, butting, and insertion among the plurality of operations. Thus, the credibility of the estimation result can be improved.

The machine controlling unit 104 may record a success rate of a series of operations by the robot 200 based on the sensor value of the force sensor 310, and the state estimation unit 110 may estimate whether the force sensor 310 is in the abnormal state by using the success rate. For example, the state estimation unit 110 estimates whether the force sensor 310 is in the abnormal state based on a success rate of a series of operations including air cutting, butting, exploration, and insertion and an abnormal operation among air cutting, butting, exploration, and insertion.

For example, in a case where the percentage of abnormal operations among the series of operations has become higher than a predetermined percentage, the state estimation unit 110 estimates that the force sensor 310 is in the abnormal state when the state estimation unit 110 judges that the success rate of the series of operations is decreased. Even if the percentage of abnormal operations among the series of operations has become higher than the predetermined percentage, the state estimation unit 110 estimates that the force sensor 310 is not in the abnormal state when the state estimation unit 110 judges that the success rate of the series of operations is not decreased. Thus, estimation can be executed which is based on the observation that it is likely that it is an abnormality in the force sensor 310 when a plurality of operations indicate an abnormality and also the operation success rate is decreased, and this can contribute to improvement of estimation accuracy.

The notifying unit 112 may execute a notification processing to notify a combination of the success rate of the series of operations, and the state of the robot 200 and the degree of reliability of the force sensor 310. This can make it possible to determine that adjustment, repair, and exchange or the like of the force sensor 310 may not be executed in a hurry, if the degree of reliability of the force sensor 310 is relatively low but the operation success rate is not low. In addition, this can make it possible to determine that adjustment, repair, and exchange or the like of the force sensor 310 needs to be executed in a hurry, if the degree of reliability of the force sensor 310 is not very low but the operation success rate is low.

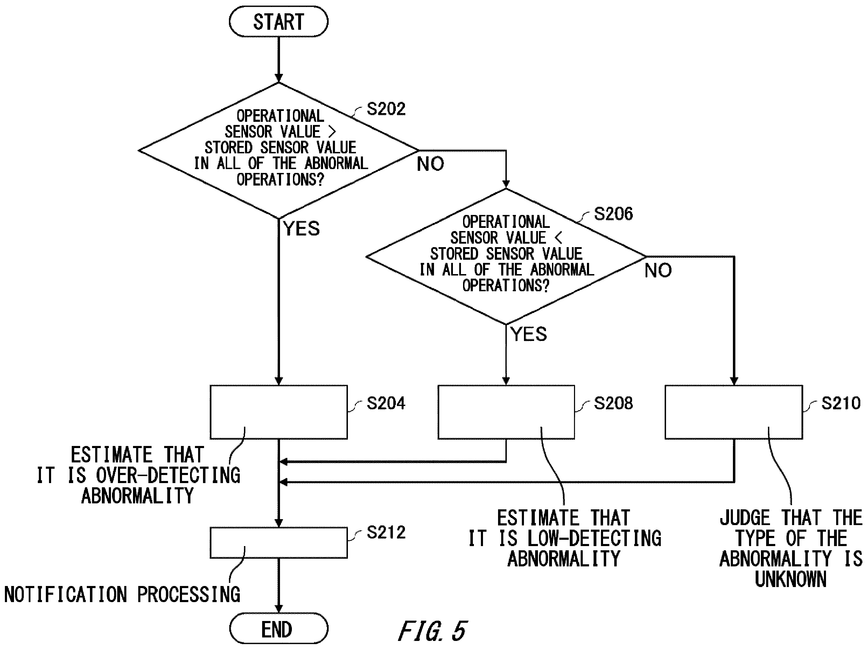

Fig. 5 schematically shows one example of a processing flow by the machine controller 100. Described here is the processing flow in which the state estimation unit 110 estimates the type of an abnormality of the force sensor 310 based on a comparison of the difference between the operational sensor value and the stored sensor value in a plurality of operations that satisfy the condition in which the sensor value of the force sensor 310 indicates an abnormality.

At S202, the state estimation unit 110 judges whether the operational sensor value is larger than the stored sensor value in all of the abnormal operations among the plurality of operations. If it is YES, the process proceeds to S204, and, if it is NO, the process proceeds to S206. At S204, the state estimation unit 110 estimates that the type of the abnormality of the force sensor 310 is an over-detecting abnormality that erroneously increases the sensor value.

At S206, the state estimation unit 110 judges whether the operational sensor value is smaller than the stored sensor value in all of the abnormal operations among the plurality of operations. If it is YES, the process proceeds to S208, and, if it is NO, the process proceeds to S210. At S208, the state estimation unit 110 estimates that the type of the abnormality of the force sensor 310 is a low-detecting abnormality which erroneously decreases the sensor value. At S210, the state estimation unit 110 judges that the type of the abnormality is unknown.

At S212, the notifying unit 112 executes a notification processing to notify that the force sensor 310 is in the abnormal state and the type of the abnormality estimated by the state estimation unit 110. As illustrated in Fig. 5, the notifying unit 112 notifying the type of the abnormality of the force sensor 310 estimated by the state estimation unit 110 can make it easier to deal with the force sensor 310 afterwards, compared to a case where the notifying unit 112 only notifies that the force sensor 310 is in the abnormal state.

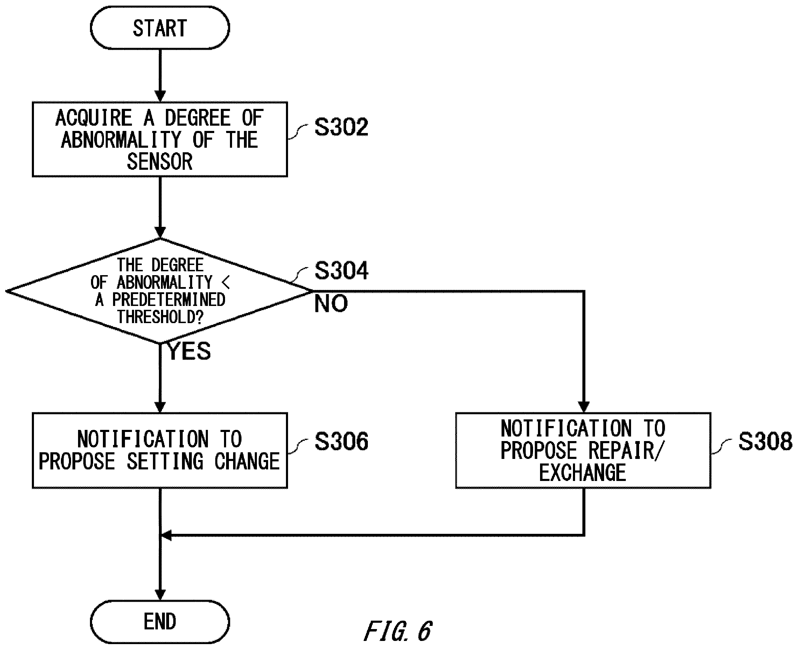

Fig. 6 schematically shows one example of a processing flow by the machine controller 100. Described here is the processing flow when the notifying unit 112 executes a notification processing according to the difference between the operational sensor value and the stored sensor value in a case where the state estimation unit 110 estimates that the force sensor 310 is in the abnormal state. The notifying unit 112 may be one example of the abnormality notifying unit.

At S302, the notifying unit 112 acquires a degree of abnormality of the force sensor 310 estimated by the state estimation unit 110. At S304, the notifying unit 112 judges whether the degree of abnormality of the force sensor 310 acquired at S302 is lower than a predetermined threshold. When the notifying unit 112 judges that the degree of abnormality of the force sensor 310 acquired at S302 is lower than the predetermined threshold, the process proceeds to S306, and when the notifying unit 112 judges that the degree of abnormality of the force sensor 310 acquired at S302 is not lower than the predetermined threshold, the process proceeds to S308.

At S306, the notifying unit 112 executes a notification processing to propose setting change of the force sensor 310. At S308, the notifying unit 112 executes a notification processing to propose repair or exchange of the force sensor 310.

Thus, only setting change can be proposed when it can be said that the difference between the operational sensor value and the stored sensor value is small and the degree of abnormality of the force sensor 310 is relatively low, and repair or exchange can be proposed when it can be said that the difference is large and the degree of abnormality of the force sensor 310 is relatively high. That is, by executing the processing shown in Fig. 6, the machine controller 100 can execute an appropriate proposition according to the degree of abnormality of the force sensor 310.

Note that, at S306, the notifying unit 112 may execute a notification processing to propose restart of the force sensor 310 or reconsideration of the position for attaching the force sensor 310, instead of the notification processing to propose setting change.

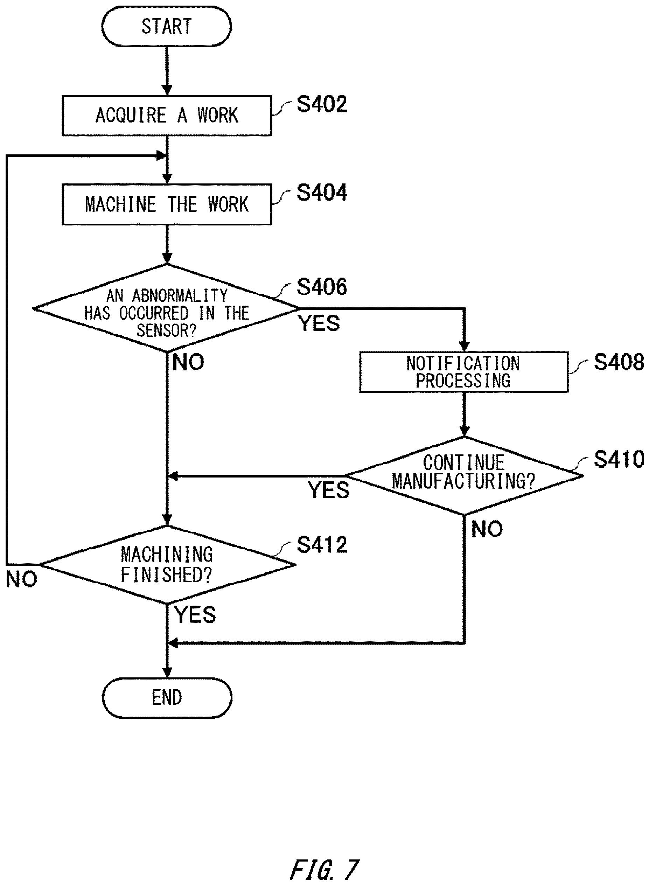

Fig. 7 schematically shows one example of a method of manufacturing a manufacture item by the system 10. The system 10 is configured to manufacture the manufacture item by machining a work.

At S402, the work machine 20 acquires the work to be machined. The work machine 20 acquires a plurality of works when a plurality of works are to be machined.

At S404, the machine controller 100 causes the work machine 20 to execute machining of the work based on a sensor value outputted by the sensor 30. At S406, the machine controller 100 estimates whether an abnormality has occurred in the sensor 30 based on the sensor value outputted by the sensor 30. When the machine controller 100 estimates that no abnormality has occurred, the process proceeds to S412, and, when the machine controller 100 estimates that an abnormality has occurred, the process proceeds to S408.

At S408, the machine controller 100 executes a notification processing to notify that an abnormality has occurred in the sensor 30. The machine controller 100 may notify the administrator of the system 10 or the like that an abnormality has occurred in the sensor 30.

At S410, the machine controller 100 judges whether to continue manufacturing. The machine controller 100 may judge whether to continue manufacturing according to an instruction by the administrator or the like who is notified that an abnormality has occurred in the sensor 30 at S408. When the machine controller 100 judges to continue manufacturing, the process proceeds to S412, and, when the machine controller 100 judges not to continue manufacturing, the manufacturing processing ends.

At S412, the machine controller 100 judges whether the machining of the work is finished. When a plurality of works are acquired at S402, the machine controller 100 judges whether the machining is finished for all the plurality of works. By finishing of the machining, the manufacturing of the manufacture item is completed. When the machine controller 100 judges that the machining is not finished for all the plurality of works, the process returns to S404, and, when the machine controller 100 judges that the machining is finished for all the plurality of works, the processing ends.

In the above-described embodiment, an example is described taking the force sensor 310 as one example of the sensor 30, in which, by generating a normal distribution of a group of sensor values based on the output from the sensor 30 while the work machine 20 is performing an operation in a situation in which it is confirmed that the sensor 30 is in the normal condition and using the normal distribution as reference data, the sensor 30 is estimated to be in the abnormal state when the operational sensor value deviates from the normal distribution of the reference data by an amount equal to or more than a threshold, and the degree of reliability of the sensor 30 is estimated such that, the more the operational sensor value deviates from the normal distribution of the reference data, the lower the degree of reliability of the sensor 30 becomes. The state estimation unit 110 may execute the processing for each content of operations performed by the work machine 20.

For example, the state estimation unit 110 generates reference data for each of a plurality of operations in a fitting operation. The plurality of operations in the fitting operation may include air cutting, butting, exploration, and insertion. In addition, for example, for each operation other than the fitting operation, the state estimation unit 110 generates reference data for each of a plurality of operations constituting the operation. Examples of operations other than the fitting operation include, but not limited to, assembly, painting, screwing, labelling, packaging, grinding, injection molding, and welding or the like.

In the above-described embodiment, an example is described taking the force sensor 310 as one example of the sensor 30, in which the state estimation unit 110 estimates the failure timing of the sensor 30 based on an increase rate, when the difference between the operational sensor value and the stored sensor value is increased in time series in a plurality of operations by the work machine 20 based on the sensor value of the sensor 30. The state estimation unit 110 may estimate the failure timing of the sensor 30 based on an increase tendency of the difference between the operational sensor value and the stored sensor value.

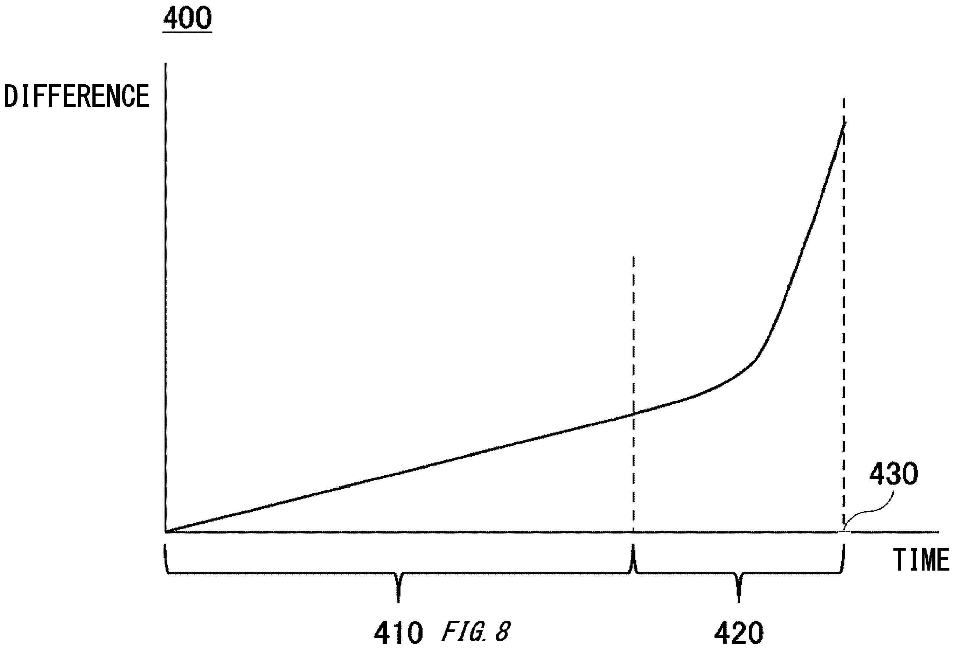

Fig. 8 schematically shows one example of the increase tendency data 400. The increase tendency data 400 indicates an increase tendency of the difference between the operational sensor value from the force sensor and the stored sensor value when the robot repeatedly performs the same operation. Fig. 8 shows a tendency derived by analyzing past data.

When estimating the failure timing of the force sensor 310 of the robot 200, the state estimation unit 110 may use a tendency derived by analyzing the past data of another force sensor of the same type as the force sensor 310 of another robot of the same type as the robot 200. For example, the another robot of the same type as the robot 200 is a robot of the same model as the robot 200. The another robot of the same type as the robot 200 may be the same product as the robot 200. For example, the another force sensor of the same type as the force sensor 310 is a force sensor of the same model as the force sensor 310. The another force sensor of the same type as the force sensor 310 may be the same product as the force sensor 310. In this way, when estimating the failure timing of the sensor 30 of the work machine 20, the state estimation unit 110 may use the tendency derived by analyzing the past data of another sensor of the same type as the sensor 30 of another work machine of the same type as the work machine 20.

Analyzing the past data of the force sensor shows that there are a period 410 in which the difference between the operational sensor value and the stored sensor value increases linear functionally and a period 420 in which the difference increases exponentially, before the force sensor reaches the failure timing 430. The state estimation unit 110 may judge the failure timing of the force sensor 310 based on the difference between the operational sensor value of the force sensor 310 of the robot 200 under operation and the stored sensor value as well as the increase tendency data 400. For example, the state estimation unit 110 determines when the failure timing comes by monitoring the difference between the operational sensor value of the force sensor 310 of the robot 200 under operation and the stored sensor value, judging whether the difference is located in the period 410 or in the period 420 of the increase tendency data 400, and estimating a parameter such as the coefficient of tendency indicated by each period from the history of the difference. Even if the force sensor 310 under operation is more susceptible to failure or less susceptible to failure compared to the force sensor that provided the past data, it is highly probable that its tendency exhibits a similar tendency to the increase tendency data. Therefore, the use of the increase tendency data 400 can improve estimation accuracy of the failure timing.

In addition, for example, the state estimation unit 110 monitors the difference between the operational sensor value of the force sensor 310 of the robot 200 under operation and the stored sensor value, and continuously grasps where in the tendency indicated by the increase tendency data 400 the difference is located, and grasps whether the current time point is in the period 410 or in the period 420. Then, for example, the state estimation unit 110 judges that the failure timing is drawing near, when the state estimation unit 110 judges that the current time point is in the period 420. The notifying unit 112 may execute a notification processing to notify that the failure timing of the force sensor 310 is drawing near in response to the state estimation unit 110 judging that the failure timing is drawing near. Thus, the notifying unit 112 can notify that the failure timing may be drawing near, before the degradation degree of the force sensor 310 becomes higher.

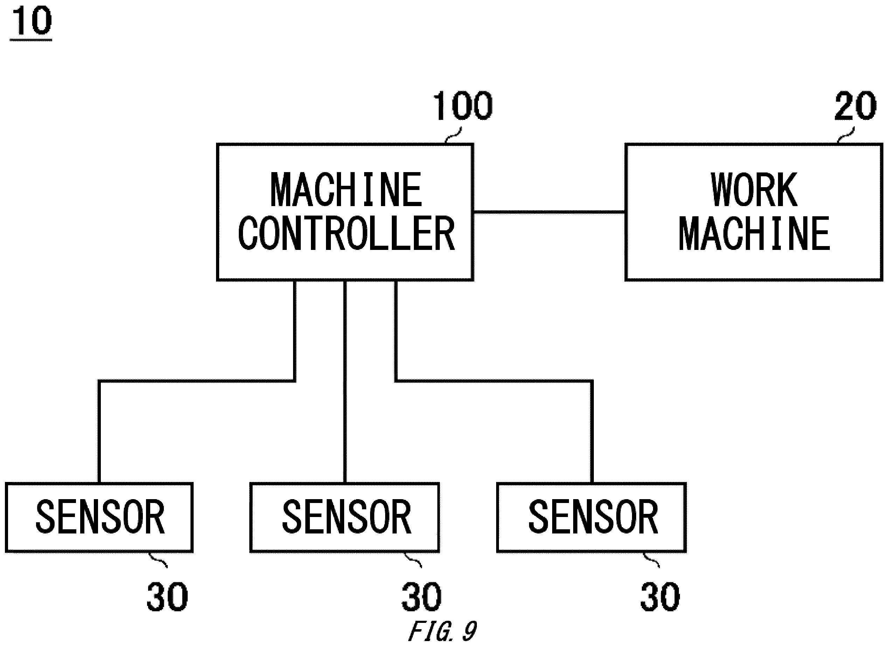

Fig. 9 schematically shows one example of the system 10. Points that are different from the system 10 shown in Fig. 1 and Fig. 2 are mainly described below. The system 10 shown in Fig. 9 includes a plurality of sensors 30 related to one operation.

For at least one operation executed by the work machine 20, the machine controlling unit 104 may control the work machine 20 based on sensor values outputted by the plurality of sensors 30 in order to cause the work machine 20 to execute the operation. The state estimation unit 110 may estimate respective states of the plurality of sensors 30 based on respective sensor values of the plurality of sensors 30. When only some of the respective sensor values of the plurality of sensors 30 satisfy the condition in which the sensor value indicates an abnormality, the state estimation unit 110 may estimate that the sensor 30 that satisfies the condition in which the outputted sensor value indicates an abnormality is in the abnormal state. For example, when only one sensor 30 of the plurality of sensors 30 satisfies the condition in which the sensor value indicates an abnormality, the state estimation unit 110 estimates that the one sensor 30 is in the abnormal state.

Among the plurality of sensors 30 related to an action, when only a sensor value of one sensor 30 indicates an abnormality while sensor values of other sensors 30 are normal, it is likely that the one sensor 30 is in the abnormal state. Thus, executing the estimation as described above can contribute to improvement of estimation accuracy.

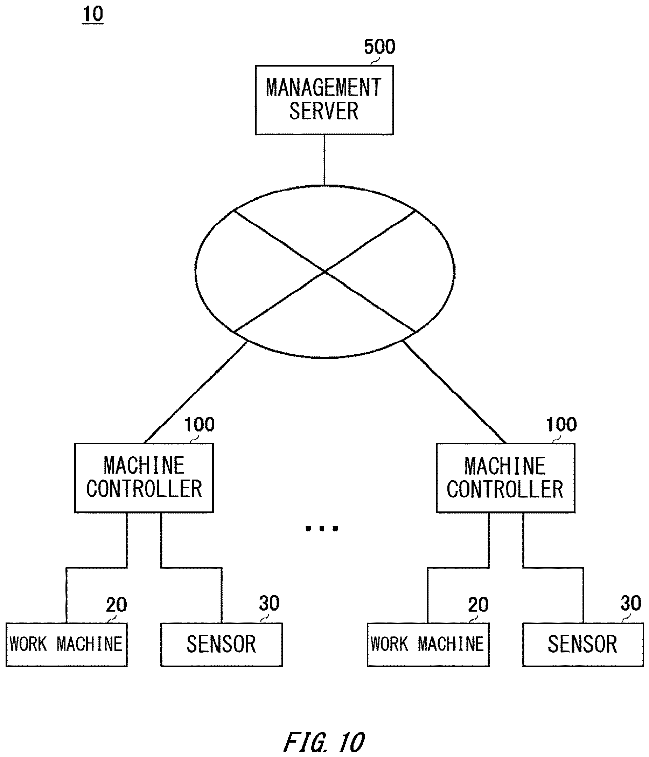

Fig. 10 schematically shows one example of the system 10. The system 10 shown in Fig. 10 includes a management server 500 for managing a plurality of machine controllers 100. Each of the plurality of machine controllers 100 controls a work machine 20 that is connected to itself based on a sensor value of a sensor 30 that is connected to itself. For example, the plurality of work machines 20 may have a relationship for performing operations successively on the same work target, such that, for example, one work machine 20 of the plurality of work machines 20 performs a fitting operation, and another work machine 20 of the plurality of work machines 20 performs an assembly operation of the target fitted by the one work machine 20.

Each of the plurality of machine controllers 100 may share various types of information via the management server 500. For example, a first machine controller 100 of the plurality of machine controllers 100 acquires various types of information from a second machine controller 100 of the plurality of machine controllers 100 via the management server 500.

For example, the sensor value acquiring unit 106 of the first machine controller 100 connected to a first work machine 20 and a first sensor 30 acquires a sensor value of a second sensor 30 (which may be described as a second sensor value) from the second machine controller 100 connected a second work machine 20 and the second sensor 30, via the management server 500. Then, the state estimation unit 110 of the first machine controller 100 (which may be described as a first state estimation unit 110) estimates a state of the first sensor 30 based on a sensor value of the first sensor 30 (which may be described as a first sensor value) and the second sensor value.

As a specific example, the first state estimation unit 110 pre-stores a normal range of operational sensor values in a situation in which the first sensor 30 and the second sensor 30 are operating normally. The normal range of respective operational sensor values of the plurality of sensors 30 can be determined in advance by the management server 500, for example.

For example, the management server 500 acquires a operational sensor value of the sensor 30 from each of the plurality of machine controllers 100, and stores the history. The management server 500 determines the normal range of operational sensor values for each of the plurality of sensors 30, by analyzing the history of the operational sensor values in a situation in which the plurality of work machines 20 and the plurality of sensors 30 are operating normally. For example, the management server 500 determines that A to B is the normal range for operational sensor values of the first sensor 30, and C to D is the normal range for operational sensor values of the second sensor 30. The management server 500 may notify the plurality of machine controllers 100 of the determined normal ranges of operational sensor values of the plurality of sensors 30.

The first state estimation unit 110 may estimate a state of the first sensor 30 based on the normal ranges of operational sensor values of the first sensor 30 and the second sensor 30 as well as operational sensor values of the first sensor 30 and the second sensor 30 under operation. For example, the first state estimation unit 110 estimates that the first sensor 30 is in the abnormal state, when the operational sensor value of the second sensor 30 is within the normal range and the operational sensor value of the first sensor 30 is out of the normal range. In a situation where operations are being performed on the same work target, it can be said that some problem may have occurred in the work target when the operational sensor values of both of the first sensor 30 and the second sensor 30 are out of the normal range, but, on the other hand, an abnormality may have occurred in the first sensor 30 when only the operational sensor value of the first sensor 30 is out of the normal range. The machine controller 100 according to the present embodiment can provide an estimation result based on such observation.

Note that an example is described above in which the normal ranges of respective operational sensor values of the plurality of sensors 30 are used, but it is not limited thereto. A normal range of the difference between respective operational sensor values of the plurality of sensors 30 and the stored sensor values may be used. In this case, the first state estimation unit 110 may estimate that the first sensor 30 is in the abnormal state, when the difference between the operational sensor value of the second sensor 30 and the stored sensor value is within the normal range and the difference between the operational sensor value of the first sensor 30 and the stored sensor value is out of the normal range.

The management server 500 may function as the state estimation device. That is, the management server 500 may be one example of the state estimation device. In this case, the management server 500 may acquire a sensor value from each of the plurality of machine controllers 100 and control the work machine 20 by sending an instruction based on the acquired sensor value to the machine controller. In addition, the management server 500 may estimate the state of the sensor 30 based on the sensor value of the sensor 30 without controlling the work machine 20.

The management server 500 may estimate the states of the plurality of sensors 30 based on the normal ranges of respective operational sensor values of the plurality of sensors 30 and the operational sensor value of the sensor 30 acquired from each of the plurality of machine controllers 100 under operation. For example, when the operational sensor values of sensors 30 accounting for a percentage equal to or lower than a predetermined percentage among the plurality of sensors 30 deviate from the normal range, the management server 500 estimates that the sensors 30 accounting for the percentage equal to or lower than the predetermined percentage are in the abnormal state. In a case where operational sensor values of many sensors 30 among the plurality of sensors 30 deviate from the normal range, it can be said that it is likely that the work target has some problem. On the other hand, for example, in a case where only an operational sensor value of one sensor 30 among the plurality of sensors 30 deviates from the normal range, it can be said that it is likely that an abnormality has occurred in the sensor 30 itself, not in the work target. The management server 500 according to the present embodiment can provide an estimation result based on such observation. Note that the management server 500 may use a normal range of the difference between respective operational sensor values of the plurality of sensors 30 and the stored sensor values, instead of the normal ranges of respective operational sensor values of the plurality of sensors 30.

The management server 500 may estimate the states of the first sensor 30 and the second sensor 30 based on the relationship between the operational sensor value of the first sensor 30 and the operational sensor value of the second sensor 30. For example, the management server 500 pre-stores sensor value relationship data indicating the relationship between an operational sensor value of the first sensor 30 and an operational sensor value of the second sensor 30 in a situation in which the first work machine 20, the second work machine 20, the first sensor 30 and the second sensor 30 are operating normally. Registered in the sensor value relationship data is, for example, what range of values the operational sensor value of the second sensor 30 should indicate when the operational sensor value of the first sensor 30 is a first value.

The management server 500 may estimate the states of the first sensor 30 and the second sensor 30 based on the sensor value relationship data as well as the operational sensor value of the first sensor 30 and the operational sensor value of the second sensor 30 under operation. For example, the management server 500 determines a range of the operational sensor value of the second sensor 30 corresponding to the operational sensor value of the first sensor 30 from the sensor value relationship data, and estimates that either of the first sensor 30 and the second sensor 30 is in the abnormal state when the operational sensor value of the second sensor 30 is out of the range. If the first work machine 20, the second work machine 20, the first sensor 30, and the second sensor 30 are operating normally, then it is highly probable that the operational sensor value of the first sensor 30 and the operational sensor value of the second sensor 30 keep a certain relationship. Therefore, when the relationship collapses, it can be said that it is likely that the at least one of the first sensor 30 and the second sensor 30 is in the abnormal state. The management server 500 according to the present embodiment can provide an estimation result based on such observation.

The plurality of machine controllers 100 managed by the management server 500 may control the same type of work machines 20. The plurality of machine controllers 100 managed by the management server 500 may control different types of work machines 20. In this case, the management server 500 may manage the machine controllers 100 by sorting the machine controllers 100 into groups, each group including the machine controllers 100 controlling the same type of work machines 20.

The management server 500 may continuously acquire operational sensor values of the sensors 30 from the plurality of machine controllers 100, and store the history. The management server 500 may generate an estimation model for estimating the failure timing from transition of operational sensor values, by collecting the history of operational sensor values of the plurality of sensors 30 until the failure occurs and executing learning with the collected data for each type of the sensors 30. Then, the management server 500 may estimate the failure timing of the sensor 30 by continuously acquiring the operational sensor values of the sensor 30 from the machine controller 100 under operation and using the estimation model corresponding to the type of the sensor 30. Note that, the management server 500 may generate an estimation model for estimating the failure timing from transition of the difference between the operational sensor value and the stored sensor value, by collecting the history of the difference between the operational sensor value and the stored sensor value of the plurality of sensors 30 until the failure occurs and executing learning with the collected data for each type of the sensors 30.

The machine communication unit 102 in the above-described embodiment may be one example of the means of communicating with the work machine 20. The machine controlling unit 104 in the above-described embodiment may be one example of the means of controlling the work machine 20. The sensor value acquiring unit 106 in the above-described embodiment may be one example of the means of acquiring a sensor value. The sensor value storing unit 108 in the above-described embodiment may be one example of the mean of storing the sensor value acquired by the sensor value acquiring unit 106. The sensor value storing unit 108 may be one example of the history storing means of storing the history of at least one of the sensor value and the derived value. The state estimation unit 110 in the above-described embodiment may be one example of the means of estimating a state of the sensor 30. The notifying unit 112 in the above-described embodiment may be one example of the means of executing a notification processing to notify the state of the work machine 20 estimated by the machine controlling unit 104. The output unit 114 in the above-described embodiment may be one example of the outputting means having at least one of a display output function and an audio output function. The test data storing unit 116 in the above-described embodiment may be one example of the means of storing test data for causing the work machine 20 to execute a predetermined action as an action for estimating the state of the sensor 30. The test data registering unit 118 in the above-described embodiment may be one example of the means of registering the test data. The abnormality checking unit 120 in the above-described embodiment may be one example of the means of checking whether an abnormality has actually occurred in the sensor 30 when the state estimation unit 110 estimates that the sensor 30 is in the abnormal state. The accuracy rate storage unit 122 in the above-described embodiment may be one example of the means of storing, in association with each other, basis information indicating a basis on which the state estimation unit 110 estimated that the sensor 30 is in the abnormal state and the accuracy rate of the estimation result derived by the abnormality checking unit 120.

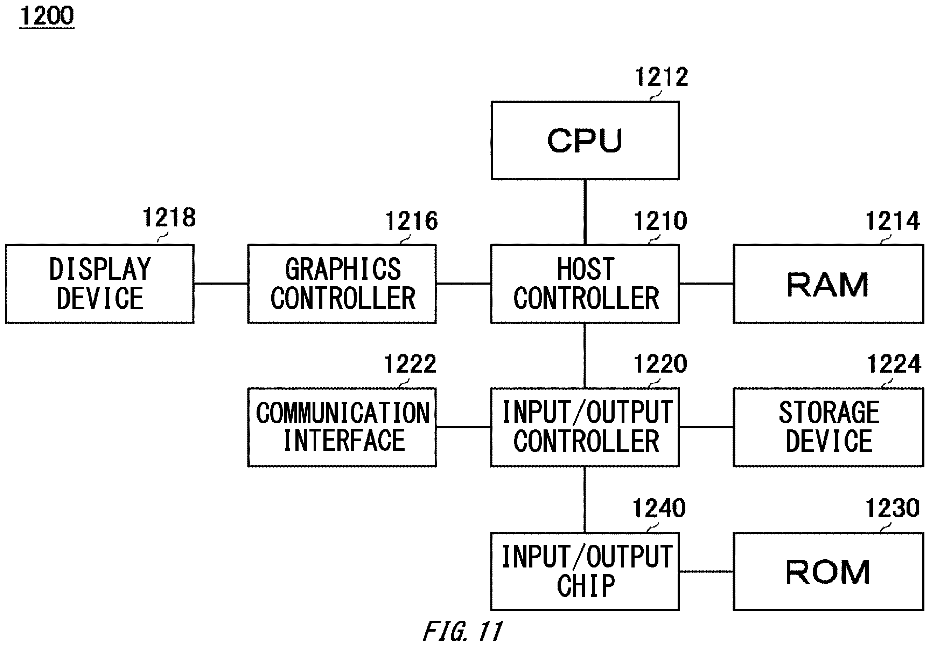

Fig. 11 schematically shows one example of a hardware configuration of a computer 1200 configured to function as the machine controller 100 or a management server 500. A program that is installed in the computer 1200 can cause the computer 1200 to function as one or more "units" of apparatuses of the present embodiments or perform operations associated with the apparatuses of the present embodiments or the one or more units, and/or can cause the computer 1200 to perform processes of the present embodiments or steps thereof. Such a program may be executed by the CPU 1212 to cause the computer 1200 to perform certain operations associated with some or all of the blocks of flowcharts and block diagrams described herein.

The computer 1200 according to the present embodiment includes a CPU 1212, a RAM 1214, and a graphics controller 1216, which are mutually connected by a host controller 1210. The computer 1200 also includes input/output units such as a communication interface 1222, a storage device 1224, a DVD drive and an IC card drive, which are connected to the host controller 1210 via an input/output controller 1220. The DVD drive may be a DVD-ROM drive, a DVD-RAM drive, etc. The storage device 1224 may be a hard disk drive, a solid-state drive, etc. The computer 1200 also includes legacy input/output units such as a ROM 1230 and a keyboard, which are connected to the input/output controller 1220 through an input/output chip 1240.

The CPU 1212 operates according to programs stored in the ROM 1230 and the RAM 1214, thereby controlling each unit. The graphics controller 1216 obtains image data generated by the CPU 1212 on a frame buffer or the like provided in the RAM 1214 or in itself, and causes the image data to be displayed on a display device 1218.

The communication interface 1222 communicates with other electronic devices via a network. The storage device 1224 stores programs and data used by the CPU 1212 within the computer 1200. The DVD drive reads the programs or the data from the DVD-ROM or the like, and provides the storage device 1224 with the programs or the data. The IC card drive reads programs and data from an IC card, and/or writes programs and data into the IC card.

The ROM 1230 stores therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port or the like to the input/output controller 1220.

A program is provided by a computer readable storage medium such as the DVD-ROM or the IC card. The program is read from the computer readable storage medium, installed into the storage device 1224, RAM 1214, or ROM 1230, which are also examples of a computer readable storage medium, and executed by the CPU 1212. The information processing described in these programs is read into the computer 1200, resulting in cooperation between a program and the above-mentioned various types of hardware resources. An apparatus or method may be constituted by realizing the operation or processing of information in accordance with the usage of the computer 1200.

For example, when communication is performed between the computer 1200 and an external device, the CPU 1212 may execute a communication program loaded onto the RAM 1214 to instruct communication processing to the communication interface 1222, based on the processing described in the communication program. The communication interface 1222, under control of the CPU 1212, reads transmission data stored on a transmission buffer region provided in a recording medium such as the RAM 1214, the storage device 1224, the DVD-ROM, or the IC card, and transmits the read transmission data to a network or writes reception data received from a network to a reception buffer region or the like provided on the recording medium.

In addition, the CPU 1212 may cause all or a necessary portion of a file or a database to be read into the RAM 1214, the file or the database having been stored in an external recording medium such as the storage device 1224, the DVD drive (DVD-ROM), the IC card, etc., and perform various types of processing on the data on the RAM 1214. The CPU 1212 may then write back the processed data to the external recording medium.

Various types of information, such as various types of programs, data, tables, and databases, may be stored in the recording medium to undergo information processing. The CPU 1212 may perform various types of processing on the data read from the RAM 1214, which includes various types of operations, information processing, condition judging, conditional branch, unconditional branch, search/replacement of information, etc., as described throughout this disclosure and designated by an instruction sequence of programs, and writes the result back to the RAM 1214. In addition, the CPU 1212 may search for information in a file, a database, etc., in the recording medium. For example, when a plurality of entries, each having an attribute value of a first attribute associated with an attribute value of a second attribute, are stored in the recording medium, the CPU 1212 may search for an entry whose attribute value of the first attribute matches the condition a designated condition, from among the plurality of entries, and read the attribute value of the second attribute stored in the entry, thereby obtaining the attribute value of the second attribute associated with the first attribute satisfying the predetermined condition.

The above described program or software modules may be stored in the computer readable storage medium on or near the computer 1200. In addition, a recording medium such as a hard disk or a RAM provided in a server system connected to a dedicated communication network or the Internet can be used as the computer readable storage medium, thereby providing the program to the computer 1200 via the network.

Blocks in flowcharts and block diagrams in the present embodiments may represent steps of processes in which operations are performed or "units" of apparatuses responsible for performing operations. Certain steps and "units" may be implemented by dedicated circuitry, programmable circuitry supplied with computer readable instructions stored on a computer readable storage medium, and/or processors supplied with computer readable instructions stored on a computer readable storage medium. Dedicated circuitry may include digital and/or analog hardware circuits and may include integrated circuits (IC) and/or discrete circuits. For example, programmable circuitry may include reconfigurable hardware circuits including logical AND, OR, XOR, NAND, NOR, and other logical operations, flip-flops, registers, and memory elements, such as field-programmable gate arrays (FPGA), programmable logic arrays (PLA), etc.

A computer readable storage medium may include any tangible device that can store instructions for execution by a suitable device, such that the computer readable storage medium having instructions stored therein comprises an article of manufacture including instructions which can be executed to create means for performing operations specified in the flowcharts or block diagrams. Examples of the computer readable storage medium may include an electronic storage medium, a magnetic storage medium, an optical storage medium, an electromagnetic storage medium, a semiconductor storage medium, etc. More specific examples of the computer readable storage medium may include a floppy (registered trademark) disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a compact disc read-only memory (CD-ROM), a digital versatile disk (DVD), a BLU-RAY (registered trademark) disc, a memory stick, an integrated circuit card, etc.

Computer readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, JAVA (registered trademark), C++, etc., and conventional procedural programming languages, such as the "C" programming language or similar programming languages.

Computer readable instructions may be provided to a processor of a general purpose computer, special purpose computer, or other programmable data processing apparatus, or to programmable circuitry, locally or via a local area network (LAN), wide area network (WAN) such as the Internet, etc., so that the processor of the general purpose computer, special purpose computer, or other programmable data processing apparatus, or the programmable circuitry executes the computer readable instructions to create means for performing operations specified in the flowcharts or block diagrams. Examples of processors include computer processors, processing units, microprocessors, digital signal processors, controllers, microcontrollers, etc.

While the embodiments of the present invention have been described, the technical scope of the invention is not limited to the above described embodiments. It is apparent to persons skilled in the art that various alterations or improvements can be added to the above-described embodiments.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: system; 20: work machine; 30: sensor; 40, 50: work; 100: machine controller; 102: machine communication unit; 104: machine controlling unit; 106: sensor value acquiring unit; 108: sensor value storing unit; 110: state estimation unit; 112: notifying unit; 114: output unit; 116: test data storing unit; 118: test data registering unit; 120: abnormality checking unit; 122: accuracy rate storage unit; 130: estimation table; 200: robot; 210: platform; 220: arm; 230: hand; 232: gripping claw; 310: force sensor; 320: state detection sensor; 400: increase tendency data; 410: period; 420: period; 430: failure timing; 500: management server; 1200: computer; 1210: host controller; 1212: CPU; 1214: RAM; 1216: graphics controller; 1218: display device; 1220: input/output controller; 1222: communication interface; 1224: storage device; 1230: ROM; 1240: input/output chip

## Claims

1. A state estimation device comprising:
a machine controlling unit (100) configured to control a work machine (20) based on a sensor value acquired from a sensor (30), the sensor value being related to an operation by the work machine (20) among a plurality of operations performed by the work machine (20);
a state estimation unit (110) configured to estimate a state of the sensor (30) based on the sensor value,
**characterized in that**
the state estimation unit (110) is further configured to estimate whether the sensor (30) is in an abnormal state based on whether the operation by the work machine (20) related to the sensor value is an abnormal operation.

2. The state estimation device according to claim 1, wherein
the state estimation unit (110) is configured to estimate the state of the sensor (30) based on the sensor value outputted by the sensor (30) while the machine controlling unit (100) is causing the work machine to perform a predetermined action as an action for estimating the state of the sensor (30).

3. The state estimation device according to claim 1 or 2, wherein
the machine controlling unit (100) is configured to estimate a state of the work machine (20) based on the sensor value, and
wherein the state estimation device comprises a machine state notifying unit configured to execute a notification processing to notify a combination of the state of the work machine (20) and the state of the sensor (30).

4. The state estimation device according to claim 3, wherein
the state estimation unit (110) is configured to estimate a degree of reliability of the sensor (30) based on the sensor value, and
wherein the machine state notifying unit is configured to execute a notification processing to notify a combination of the state of the work machine (20) and the degree of reliability of the sensor (30) or is configured to, based on the degree of reliability of the sensor (30), execute a notification processing to notify a combination of a success rate of a series of operations including a plurality of operations by the work machine (20), and the state of the work machine and the degree of reliability of the sensor (30).

5. The state estimation device according to any of claims 1 to 4, wherein
the state estimation unit (110) is configured to estimate whether the sensor (30) is in the abnormal state based on whether a percentage or a combination of operations by the work machine related to respective sensor values, including said operation, are abnormal operations, among the plurality of operations performed by the work machine (20).

6. The state estimation device according to any of claims 1 to 5, wherein
the state estimation unit (110) is configured to estimate that the sensor (30) is in the abnormal state in a case where a plurality of operations performed by the work machine (20) related to respective sensor values during a predetermined period and including said operation are abnormal operations, among the plurality of operations by the work machine (20),
or is configured to estimate whether the sensor is in the abnormal state, based on:
• a success rate of a series of operations including the plurality of operations by the work machine (20) and
• on whether said operation by the work machine (20) related to the sensor value is an abnormal operation.

7. The state estimation device according to any one of claims 1 to 6, comprising:
a sensor state notifying unit configured to execute, in a case where the state estimation unit (110) estimates that the sensor (30) is in the abnormal state, a notification processing to notify an estimation result and information indicating said abnormal operation or an abnormality notifying unit configured to execute, in a case where the state estimation unit estimates that the sensor is in the abnormal state, a notification processing according to the difference between the sensor value based on an output from the sensor (30) when the work machine (20) is performing said operation and a stored sensor value pre-stored in association with each of the plurality of operations.

8. The state estimation device according to any one of claims 5 or 6, comprising:
an accuracy rate storage unit (122) configured to store, in association with each other, basis information indicating a basis based on which the state estimation unit estimates that the sensor is in the abnormal state and an accuracy rate of an estimation result,
wherein the state estimation unit is configured to estimate whether the sensor (30) is in the abnormal state, based on:
• whether the operation by the work machine (20) related to the sensor value is an abnormal operation, and
• the basis information as well as the accuracy rate stored.

9. The state estimation device according to any one of claims 1 to 6, wherein
the state estimation unit (110) is configured to judge, for each of the plurality of operations, that the operation by the work machine related to the sensor value is an abnormal operation in a case where the difference between the sensor value based on an output from the sensor (30) when the work machine (20) is performing said operation and a stored sensor value pre-stored in association with each of the plurality of operations is larger than a predetermined threshold.

10. The state estimation device according to claim 9, comprising:
a history storage unit configured to store a history of the sensor value based on an output from the sensor (30),
wherein the state estimation unit is configured to estimate a failure timing of the sensor (30) based on an increase rate in case where the difference between the stored sensor value and the sensor value is increased in time series in a plurality of operations among the plurality of operations by the work machine based on the sensor value or is configured to estimate a failure timing of the sensor (30) based on an increase tendency in a case where the difference between the stored sensor value and the sensor value is increased in the plurality of operations by the work machine.

11. The state estimation device according to claim 9 or 10, wherein
the state estimation unit is configured to estimate a type of the abnormality of the sensor (30) based on a comparison of the difference between the sensor value and the stored sensor value in a plurality of operations performed by the work machine (20) related to respective sensor values that are abnormal operations.

12. The state estimation device according to claim 1, wherein
the machine controlling unit (100) is configured to, for at least one operation executed by the work machine (20), control the work machine based on sensor values outputted by a plurality of sensors including said sensor in order to cause the work machine (20) to execute the operation, and
wherein the state estimation unit (110) is configured to estimate respective states of the plurality of sensors based on respective sensor values of the plurality of sensors.

13. A system comprising:
the state estimation device according to claim 1; and
the work machine (20);
the sensor (30).

14. A state estimation method, comprising:
controlling a work machine (20) based on a sensor value acquired from a sensor (30), the sensor value being related to an operation by the work machine (20) among a plurality of operations performed by the work machine (20); and
estimating (S110) a state of the sensor (30) based on the sensor value;
**characterized by**
the operation being an operation on a manufacture item manufactured by the work machine; and the method further comprising:
estimating whether the sensor (30) is in an abnormal state based on whether the operation by the work machine related to the sensor value is an abnormal operation.

## Patentansprüche

1. Vorrichtung für Schätzung eines Zustandes, die umfasst:
eine Einheit (100) zum Steuern einer Maschine, die so ausgeführt ist, dass sie eine Arbeitsmaschine (20) auf Basis eines von einem Sensor (30) erfassten Sensorwertes steuert, wobei sich der Sensorwert auf einen Arbeitsvorgang der Arbeitsmaschine (20) einer Vielzahl von der Arbeitsmaschine (20) durchgeführter Arbeitsvorgänge bezieht;
eine Einheit (110) für Schätzung eines Zustandes, die so ausgeführt ist, dass sie einen Zustand des Sensors (30) auf Basis des Sensorwertes schätzt,
**dadurch gekennzeichnet, dass**
die Einheit (110) für Schätzung eines Zustandes des Weiteren so ausgeführt ist, dass sie basierend darauf, ob der sich auf den Sensorwert beziehende Arbeitsvorgang der Arbeitsmaschine (20) ein anormaler Arbeitsvorgang ist, schätzt, ob sich der Sensor (30) in einem anormalen Zustand befindet.

2. Vorrichtung für Schätzung eines Zustandes nach Anspruch 1, wobei
die Einheit (110) für Schätzung eines Zustandes so ausgeführt ist, dass sie den Zustand des Sensors (30) auf Basis des von dem Sensor (30) ausgegebenen Sensorwertes schätzt, während die Einheit (100) zum Steuern einer Maschine die Arbeitsmaschine veranlasst, einen vorgegebenen Vorgang als einen Vorgang zum Schätzen des Zustandes des Sensors (30) durchzuführen.

3. Vorrichtung für Schätzung eines Zustandes nach Anspruch 1 oder 2, wobei
die Einheit (100) zum Steuern einer Maschine so ausgeführt ist, dass sie einen Zustand der Arbeitsmaschine (20) auf Basis des Sensorwertes schätzt, und
die Vorrichtung für Schätzung eines Zustandes eine Einheit zum Benachrichtigen über den Zustand einer Maschine umfasst, die so ausgeführt ist, dass sie eine Benachrichtigungs-Verarbeitung ausführt, um über eine Kombination aus dem Zustand der Arbeitsmaschine (20) und dem Zustand des Sensors (30) zu benachrichtigen.

4. Vorrichtung für Schätzung eines Zustandes nach Anspruch 3, wobei
die Einheit (110) für Schätzung eines Zustandes so ausgeführt ist, dass sie einen Grad von Zuverlässigkeit des Sensors (30) auf Basis des Sensorwertes schätzt, und
die Einheit zum Benachrichtigen über den Zustand einer Maschine so ausgeführt ist, dass sie eine Benachrichtigungs-Verarbeitung ausführt, um über eine Kombination aus dem Zustand der Arbeitsmaschine (20) und dem Grad von Zuverlässigkeit des Sensors (30) zu benachrichtigen oder so ausgeführt ist, dass sie auf Basis des Grades von Zuverlässigkeit des Sensors (30) eine Benachrichtigungs-Verarbeitung ausführt, um über eine Kombination aus einer Rate von Erfolg einer Reihe von Arbeitsvorgängen, die eine Vielzahl von Arbeitsvorgängen der Arbeitsmaschine (20) einschließen, und dem Zustand der Arbeitsmaschine sowie dem Zuverlässigkeitsgrad des Sensors (30) zu benachrichtigen.

5. Vorrichtung für Schätzung eines Zustandes nach einem der Ansprüche 1 bis 4, wobei die Einheit (110) für Schätzung eines Zustandes so ausgeführt ist, dass sie basierend darauf, ob von der Vielzahl durch die Arbeitsmaschine (20) durchgeführter Arbeitsvorgänge ein Prozentsatz oder eine Kombination sich auf jeweilige Sensorwerte beziehender Arbeitsvorgänge der Arbeitsmaschine einschließlich des Arbeitsvorgangs, abnormale Arbeitsvorgänge sind, schätzt, ob sich der Sensor (30) in dem abnormalen Zustand befindet.

6. Vorrichtung für Schätzung eines Zustandes nach einem der Ansprüche 1 bis 5, wobei
die Einheit (110) für Schätzung eines Zustandes so ausgeführt ist, dass sie, wenn von der Vielzahl von Arbeitsvorgängen der Arbeitsmaschine (20) eine Vielzahl sich auf jeweilige Sensorwerte beziehender Arbeitsvorgänge, die von der Arbeitsmaschine (20) während eines vorgegebenen Zeitraums durchgeführt werden und den Arbeitsvorgang einschließen, abnormale Arbeitsvorgänge sind, schätzt, dass sich der Sensor (30) in dem abnormalen Zustand befindet.
oder so ausgeführt ist, dass sie basierend auf einer Rate von Erfolg von Arbeitsvorgängen, die die Vielzahl von Arbeitsvorgängen der Arbeitsmaschine (20) einschließen, und darauf, ob der sich auf den Sensorwert beziehende Arbeitsvorgang der Arbeitsmaschine (20) ein abnormaler Arbeitsvorgang ist, schätzt, ob sich der Sensor in dem abnormalen Zustand befindet.

7. Vorrichtung für Schätzung eines Zustandes nach einem der Ansprüche 1 bis 6, die umfasst:
eine Einheit zum Benachrichtigen über einen Zustand des Sensors, die so ausgeführt ist, dass sie wenn die Einheit (110) für Schätzung eines Zustandes schätzt, dass sich der Sensor (30) in dem abnormalen Zustand befindet, eine Benachrichtigungs-Verarbeitung ausführt, um über ein Ergebnis von Schätzung sowie Informationen zu benachrichtigen, die den abnormalen Arbeitsvorgang anzeigen, oder eine Einheit zum Benachrichtigen über Abnormalität, die so ausgeführt ist, dass sie, wenn die Einheit für Schätzung eines Zustandes schätzt, dass sich der Sensor in dem abnormalen Zustand befindet, eine Benachrichtigungs-Verarbeitung entsprechend der Differenz zwischen dem Sensorwert, der auf einem Ausgang von dem Sensor (30) basiert, wenn die Arbeitsmaschine (20) den Arbeitsvorgang durchführt, und einem gespeicherten Sensorwert durchführt, der in Verbindung mit jedem der Vielzahl von Arbeitsvorgängen vorgespeichert ist.

8. Vorrichtung für Schätzung eines Zustandes nach einem der Ansprüche 5 oder 6, die umfasst:
eine Einheit (122) für Speicherung einer Rate von Genauigkeit, die so ausgeführt ist, dass sie Basis-Informationen, die eine Basis anzeigen, auf deren Grundlage die Einheit für Schätzung eines Zustandes schätzt, dass sich der Sensor in dem abnormalen Zustand befindet, und eine Rate von Genauigkeit eines Ergebnisses von Schätzung in Verbindung miteinander speichert,
wobei die Einheit für Schätzung eines Zustandes so ausgeführt ist, dass sie basierend darauf, ob der sich auf den Sensorwert beziehende Arbeitsvorgang der Arbeitsmaschine (20) ein abnormaler Vorgang ist, und auf den Basis-Informationen sowie der Rate von Genauigkeit, die gespeichert sind, schätzt, ob sich der Sensor (30) in dem abnormalen Zustand befindet.

9. Vorrichtung für Schätzung eines Zustandes nach einem der Ansprüche 1 bis 6, wobei die Einheit (110) für Schätzung eines Zustandes so ausgeführt ist, dass sie dann für jeden der Vielzahl von Arbeitsvorgängen entscheidet, dass der sich auf den Sensorwert beziehende Arbeitsvorgang der Arbeitsmaschine ein abnormaler Arbeitsvorgang ist, wenn die Differenz zwischen dem Sensorwert, der auf einem Ausgang von dem Sensor (30) basiert, wenn die Arbeitsmaschine (20) den Arbeitsvorgang durchführt, und einem gespeicherten Sensorwert, der in Verbindung mit jedem der Vielzahl von Arbeitsvorgängen vorgespeichert ist, über einem vorgegebenen Schwellenwert liegt.

10. Vorrichtung für Schätzung eines Zustandes nach Anspruch 9, die umfasst:
eine Einheit für Speicherung eines Verlaufs, die so ausgeführt ist, dass sie einen Verlauf des Sensorwertes speichert, der auf einem Ausgang von dem Sensor (30) basiert,
wobei die Einheit für Schätzung eines Zustandes so ausgeführt ist, dass sie einen Zeitpunkt von Ausfall des Sensors (30) auf Basis einer Rate von Zunahme schätzt wenn die Differenz zwischen dem gespeicherten Sensorwert und dem Sensorwert in einer Zeitreihe in einer Vielzahl von Arbeitsvorgängen der Vielzahl von Arbeitsvorgängen der Arbeitsmaschine auf Basis des Sensorwertes zunimmt, oder so ausgeführt ist, dass sie einen Zeitpunkt von Ausfall des Sensors (30) auf Basis einer Zunahme-Tendenz schätzt, wenn die Differenz zwischen dem gespeicherten Sensorwert und dem Sensorwert in der Vielzahl von Arbeitsvorgängen der Arbeitsmaschine zunimmt.

11. Vorrichtung für Schätzung eines Zustandes nach Anspruch 9 oder 10, wobei
die Einheit für Schätzung eines Zustandes so ausgeführt ist, dass sie einen Typ der Abnormalität des Sensors (30) auf Basis eines Vergleichs der Differenz zwischen dem Sensorwert und dem gespeicherten Sensorwert in einer Vielzahl von der Arbeitsmaschine (20) durchgeführter, sich auf jeweilige Sensorwerte beziehender Arbeitsvorgänge schätzt, die abnormale Arbeitsvorgänge sind

12. Vorrichtung für Schätzung eines Zustandes nach Anspruch 1, wobei
die Einheit (100) zum Steuern einer Maschine so ausgeführt ist, dass sie für wenigstens einen von der Arbeitsmaschine (20) ausgeführten Arbeitsvorgang die Arbeitsmaschine auf Basis von Sensorwerten steuert, die von einer Vielzahl von Sensoren einschließlich des Sensors ausgegeben werden, um die Arbeitsmaschine (20) zu veranlassen, den Arbeitsvorgang auszuführen, und
die Einheit (110) für Schätzung eines Zustandes so ausgeführt ist, dass sie jeweilige Zustände der Vielzahl von Sensoren auf Basis jeweiliger Sensorwerte der Vielzahl von Sensoren schätzt.

13. System, das umfasst:
die Vorrichtung für Schätzung eines Zustandes nach Anspruch 1; und
die Arbeitsmaschine (20);
sowie den Sensor (30).

14. Verfahren für Schätzung eines Zustandes, das umfasst:
Steuern einer Arbeitsmaschine auf Basis eines von einem Sensor (30) erfassten Sensorwertes, wobei sich der Sensorwert auf einen Arbeitsvorgang der Arbeitsmaschine (20) einer Vielzahl von der Arbeitsmaschine (20) durchgeführter Arbeitsvorgänge bezieht; sowie
Schätzen (S110) eines Zustandes des Sensors (30) auf Basis des Sensorwertes;
**dadurch gekennzeichnet, dass**
der Arbeitsvorgang ein Arbeitsvorgang an einem von der Arbeitsmaschine hergestellten Herstellungserzeugnis ist und das Verfahren des Weiteren umfasst:
Schätzen, ob sich der Sensor (30) in einem anormalen Zustand befindet, basierend darauf, ob der sich auf den Sensorwert beziehende Arbeitsvorgang der Arbeitsmaschine ein abnormaler Arbeitsvorgang ist.

## Revendications

1. Dispositif d'estimation d'état comprenant :
une unité de commande de machine (100) configurée pour commander une machine de travail (20) sur la base d'une valeur de capteur acquise à partir d'un capteur (30), la valeur de capteur étant liée à une opération effectuée par la machine de travail (20) parmi une pluralité d'opérations effectuées par la machine de travail (20) ;
une unité d'estimation d'état (110) configurée pour estimer un état du capteur (30) sur la base de la valeur du capteur,
**caractérisé en ce que**
l'unité d'estimation d'état (110) est en outre configurée pour estimer si le capteur (30) est dans un état anormal sur la base du fait que l'opération par la machine de travail (20) liée à la valeur de capteur est une opération anormale.

2. Dispositif d'estimation d'état selon la revendication 1, dans lequel
l'unité d'estimation d'état (110) est configurée pour estimer l'état du capteur (30) sur la base de la valeur de capteur émise par le capteur (30) tandis que l'unité de commande de machine (100) amène la machine de travail à effectuer une action prédéterminée en tant qu'action pour estimer l'état du capteur (30).

3. Dispositif d'estimation d'état selon les revendications 1 ou 2, dans lequel
l'unité de commande de machine (100) est configurée pour estimer un état de la machine de travail (20) sur la base de la valeur du capteur, et
dans lequel le dispositif d'estimation d'état comprend une unité de notification d'état de machine configurée pour exécuter un traitement de notification pour notifier une combinaison de l'état de la machine de travail (20) et de l'état du capteur (30).

4. Dispositif d'estimation d'état selon la revendication 3, dans lequel
l'unité d'estimation d'état (110) est configurée pour estimer un degré de fiabilité du capteur (30) sur la base de la valeur du capteur, et
dans lequel l'unité de notification d'état de machine est configurée pour exécuter un traitement de notification pour notifier une combinaison de l'état de la machine de travail (20) et du degré de fiabilité du capteur (30) ou est configurée pour, sur la base du degré de fiabilité du capteur (30), exécuter un traitement de notification pour notifier une combinaison d'un taux de réussite d'une série d'opérations comprenant une pluralité d'opérations par la machine de travail (20), et l'état de la machine de travail et le degré de fiabilité du capteur (30).

5. Dispositif d'estimation d'état selon l'une quelconque des revendications 1 à 4, dans lequel
l'unité d'estimation d'état (110) est configurée pour estimer si le capteur (30) est dans l'état anormal sur la base du fait qu'un pourcentage ou une combinaison d'opérations par la machine de travail liées à des valeurs de capteur respectives, y compris ladite opération, sont des opérations anormales, parmi la pluralité d'opérations effectuées par la machine de travail (20).

6. Dispositif d'estimation d'état selon l'une quelconque des revendications 1 à 5, dans lequel
l'unité d'estimation d'état (110) est configurée pour estimer que le capteur (30) est dans l'état anormal dans un cas où une pluralité d'opérations effectuées par la machine de travail (20) liées à des valeurs de capteur respectives pendant une période prédéterminée et incluant ladite opération sont des opérations anormales, parmi la pluralité d'opérations par la machine de travail (20),
ou est configuré pour estimer si le capteur est dans l'état anormal, sur la base de :
• un taux de réussite d'une série d'opérations comprenant la pluralité d'opérations par la machine de travail (20) et
• sur le fait que ladite opération par la machine de travail (20) liée à la valeur du capteur est une opération anormale.

7. Dispositif d'estimation d'état selon l'une quelconque des revendications 1 à 6, comprenant :
une unité de notification d'état de capteur configurée pour exécuter, au cas où l'unité d'estimation d'état (110) estime que le capteur (30) est dans l'état anormal, un traitement de notification pour notifier un résultat d'estimation et des informations indiquant ledit fonctionnement anormal ou une unité de notification d'anomalie configurée pour exécuter, au cas où l'unité d'estimation d'état estime que le capteur est dans l'état anormal, un traitement de notification selon la différence entre la valeur de capteur fondée sur une sortie du capteur (30) lorsque la machine de travail (20) effectue ladite opération et une valeur de capteur stockée au préalable en association avec chacune de la pluralité d'opérations.

8. Dispositif d'estimation d'état selon l'une quelconque des revendications 5 ou 6, comprenant :
une unité de stockage de taux de précision (122) configurée pour stocker, en association les uns avec les autres, des informations de base indiquant une base sur laquelle l'unité d'estimation d'état estime que le capteur est dans l'état anormal et un taux de précision d'un résultat d'estimation,
dans lequel l'unité d'estimation d'état est configurée pour estimer si le capteur (30) est dans l'état anormal, sur la base suivante :
• si l'opération de la machine de travail (20) liée à la valeur du capteur est une opération anormale, et
• l'information de base ainsi que le taux de précision enregistré.

9. Dispositif d'estimation d'état selon l'une quelconque des revendications 1 à 6, dans lequel
l'unité d'estimation d'état (110) est configurée pour juger, pour chacune de la pluralité d'opérations, que l'opération par la machine de travail liée à la valeur de capteur est une opération anormale au cas où la différence entre la valeur de capteur fondée sur une sortie du capteur (30) lorsque la machine de travail (20) effectue ladite opération et une valeur de capteur stockée préalablement en association avec chacune de la pluralité d'opérations est supérieure à un seuil prédéterminé.

10. Dispositif d'estimation d'état selon la revendication 9, comprenant :
une unité de stockage d'historique configurée pour stocker un historique de la valeur de capteur fondée sur une sortie du capteur (30),
dans lequel l'unité d'estimation d'état est configurée pour estimer un moment de défaillance du capteur (30) sur la base d'un taux d'augmentation dans le cas où la différence entre la valeur de capteur stockée et la valeur de capteur est augmentée dans une série temporelle dans une pluralité d'opérations parmi la pluralité d'opérations par la machine de travail sur la base de la valeur de capteur ou est configurée pour estimer un moment de défaillance du capteur (30) sur la base d'une tendance à l'augmentation dans un cas où la différence entre la valeur de capteur stockée et la valeur de capteur est augmentée dans la pluralité d'opérations par la machine de travail.

11. Dispositif d'estimation d'état selon les revendications 9 ou 10, dans lequel
l'unité d'estimation d'état est configurée pour estimer un type d'anomalie du capteur (30) sur la base d'une comparaison de la différence entre la valeur de capteur et la valeur de capteur stockée dans une pluralité d'opérations effectuées par la machine de travail (20) liées à des valeurs de capteur respectives qui sont des opérations anormales.

12. Dispositif d'estimation d'état selon la revendication 1, dans lequel
l'unité de commande de machine (100) est configurée pour, pour au moins une opération exécutée par la machine de travail (20), commander la machine de travail sur la base de valeurs de capteur émises par une pluralité de capteurs comprenant ledit capteur afin d'amener la machine de travail (20) à exécuter l'opération, et
dans lequel l'unité d'estimation d'état (110) est configurée pour estimer des états respectifs de la pluralité de capteurs sur la base de valeurs de capteur respectives de la pluralité de capteurs.

13. Système comprenant :
le dispositif d'estimation d'état selon la revendication 1 ; et
la machine de travail (20) ;
le capteur (30).

14. Procédé d'estimation d'état, comprenant les opérations suivantes:
commander une machine de travail (20) sur la base d'une valeur de capteur acquise à partir d'un capteur (30), la valeur de capteur étant liée à une opération effectuée par la machine de travail (20) parmi une pluralité d'opérations effectuées par la machine de travail (20) ; et
estimer (S110) un état du capteur (30) sur la base de la valeur du capteur ;
**caractérisé par**
l'opération étant une opération sur un article manufacturé fabriqué par la machine de travail ; et le procédé comprenant en outre l'opération suivante:
estimer si le capteur (30) est dans un état anormal sur la base du fait que l'opération par la machine de travail liée à la valeur du capteur est une opération anormale.
